# EUROPÄISCHE PATENTSCHRIFT

(11) **EP 1 392 781 B1**
(45) Veröffentlichungstag und Bekanntmachung des Hinweises auf die Patenterteilung: **25.01.2006**
(21) Anmeldenummer: 02776510.6
(22) Anmeldetag: 24.05.2002
(51) Int. Cl.: C09D 5/02, C09D 5/03, C08J 3/12, C08J 3/205

(54) **KONTINUIERLICHES VERFAHREN ZUR HERSTELLUNG VON PULVERLACKSUSPENSIONEN (PULVERSLURRIES) UND PULVERLACKEN**
CONTINUOUS METHOD FOR THE PRODUCTION OF POWDER PAINT SUSPENSIONS (POWDER SLURRIES) AND POWDER PAINTS
PROCEDE DE PRODUCTION EN CONTINU DE VERNIS PULVERULENTS EN SUSPENSION (SUSPENSIONS PULVERULENTES) ET DE PEINTURES EN POUDRE

(30) Priorität: 01.06.2001 DE 10126649
(43) Veröffentlichungstag der Anmeldung: 03.03.2004
(73) Patentinhaber: BASF Coatings Aktiengesellschaft, 48165 Münster (DE)
(72) Erfinder: RINK, Heinz-Peter, 48153 Münster (DE); JUNG, Werner-Alfons, 59387 Ascheberg (DE); STANG, Michael, 38 Hong Kong (HK); WOLF, Heiko, 67069 Frankenthal (DE)
(74) Vertreter: Fitzner, Uwe
(86) Internationale Anmeldenummer: PCT/EP2002/005700
(87) Internationale Veröffentlichungsnummer: WO 2002/098994

(56) Entgegenhaltungen:
- WO-A-97/45476
- WO-A-98/45356
- DE-A- 19 652 813

## Beschreibung

Die vorliegende Erfindung betrifft ein neues kontinuierliches Verfahren zur Herstellung von Pulverlacksuspensionen (Pulverslurries) und Pulverlacken durch Emulgierung flüssiger Komponenten. Außerdem betrifft die vorliegende Erfindung die mit Hilfe des neuen kontinuierlichen Verfahrens hergestellten Pulverslurries und Pulverlacke. Des weiteren betrifft die vorliegende Erfindung die Verwendung der neuen Pulverslurries und Pulverlacke als Beschichtungsstoffe, Klebstoffe und Dichtungsmassen für das Lackieren, Verkleben und Abdichten von Kraftfahrzeugkarosserien und Teilen hiervon, Kraftfahrzeugen im Innen- und Außenbereich, Bauwerken im Innen- und Außenbereich, Türen, Fenstern und Möbeln sowie für das Lackieren, Verkleben und Abdichten im Rahmen der industriellen Lackierung insbesondere von Kleinteilen, Coils, Container, Emballagen, elektrotechnischen Bauteilen und weißer Ware.

Pulverlacke in Form wäßriger Suspensionen (Pulverslurries), die im wesentlichen frei von organischen Lösemitteln sind und sich mit Flüssiglacktechnologien verarbeiten lassen, sowie Verfahren zu ihrer Herstellung durch Schmelzeemulgierung sind aus der deutschen Patentanmeldung DE 196 52 813 A 1 bekannt. Bei diesem bekannten Verfahren werden die Bindemittel, die Vernetzungsmittel sowie gegebenenfalls weitere Zusatzstoffe oder Additive als viskose Harzschmelzen in die Dispergieraggregate eingespeist und dort in flüssiger Phase fein dispergiert. Die Bestandteile können aber auch vor ihrer Dispergierung in dem Dispergieraggregat im flüssigen Zustand zunächst homogen miteinander vermischt und dann in einen zweiten Schritt in flüssiger Phase fein dispergiert werden. Anschließend wird die resultierende Emulsion durch Abkühlen in eine Suspension mit festen, fein verteilten Partikeln überführt.

Die Isolierung der dispergierten bzw. suspendierten Partikel geht aus der deutschen Patentanmeldung nicht hervor.

Nach Spalte 7, Zeilen 4 bis 9, der DE 196 52 813 A 1 können als Stabilisatoren, Dispergiermittel oder Emulgatoren kurzkettige amphiphile Polyacrylate, die aus Acrylsäure, Ethylhexylacrylat, Hydroxyethylacrylat und einem anionischen Comonomer in lyotroper Phase durch übertragende Polymerisation hergestellt werden, verwendet werden. Die Oberflächenspannung wäßriger Lösungen der Emulgatoren bei der kritischen Micellbildungskonzentration (KMK) wird indes nicht angegeben.

Als Bindemittel kommen Polyacrylate, Polyurethane, Aminoplastharze, insbesondere aber hydroxyfunktionelle Polymethacrylate, in Betracht. Desweiteren können epoxidgruppenhaltige Bindemittel, insbesondere epoxidgruppenhaltige Polyacrylatharze, eingesetzt werden. Was die Herstellung der Bindemittel betrifft, wird lediglich angegeben, daß die epoxidgruppenhaltigen Polyacrylatharze nach allgemeinen gut bekannten Methoden durch Polymerisation hergestellt werden. Die Integration der kontinuierlichen Herstellung der Bindemittel in ein kontinuierliches Verfahren zur Herstellung von Pulverslurries und Pulverlacke durch Schmelzeemulgierung wird in der deutschen Patentanmeldung nicht beschrieben

Pulverslurries, die durch Schmelzeemulgierung hergestellt werden, werden auch in den nicht vorveröffentlichten deutschen Patentanmeldungen DE 100 06 673.9 und DE 100 18 581.9 beschrieben. Die resultierenden dispergierten Pulverlackpartikel werden indes nicht isoliert und als Pulverlacke verwendet. Als Emulgatoren werden nichtionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen verwendet. Die Oberflächenspannung wäßriger Lösungen der Emulgatoren bei der kritischen Micellbildungskonzentration (KMK) wird indes nicht angegeben. Es wird in den beiden nicht vorveröffentlichten deutschen Patentanmeldungen nicht vorgeschlagen, die Herstellung der Bindemittel kontinuierlich durchzuführen und mit einem kontinuierlichen Verfahren zur Herstellung von Pulverslurries und Pulverlacken durch Schmelzeemulgierung zu integrieren.

Ein Verfahren zur Herstellung von Pulverlacken durch Schmelzeemulgierung ist aus der internationalen Patentanmeldung WO 97/45476 bekannt.

Nach Seite 13, Zeilen 5 bis 20, der internationalen Patentanmeldung werden bei dem Verfahren Emulgatoren verwendet. Im Falle einer wäßrigen Phase wird Polyethylenglykol oder Polyvinylalkohol verwendet. Wesentlich ist, daß die Emulgatoren eine Ankerkomponente aufweisen, die die Emulgatoren mit der Schmelze durch physikalische Adsorption oder chemische Reaktion verknüpft. Beispiele geeigneter Ankerkomponenten sind polare (Meth)Acrylatcopolymerisate oder die entsprechenden Gruppen. Die Oberflächenspannung wäßriger Lösungen der Emulgatoren bei der kritischen Micellbildungskonzentration (KMK) wird indes nicht angegeben.

Für das bekannten Verfahren ist es wesentlich, daß die Ausgangsprodukte der Pulverlacke in einem Extruder aufgeschmolzen und miteinander vermischt werden. Die resultierende Schmelze wird noch im Extruder mit Wasser vermischt. Es wird nicht vorgeschlagen, die Herstellung der Bindemittel kontinuierlich durchzuführen und mit einem kontinuierlichen Verfahren zur Herstellung von Pulverslurries und Pulverlacken durch Schmelzeemulgierung zu integrieren.

Nachteilig für dieses bekannte Verfahren ist, daß die Temperaturen und die vergleichsweise langen Verweilzeiten im Extruder genau eingestellt werden müssen, um eine vorzeitige Vernetzung von Bindemitteln und Vernetzungsmitteln zu vermeiden.

Ein weiteres Verfahren zur Herstellung von Pulverlacken durch Schmelzeemulgierung ist aus der internationalen Patentanmeldung WO 98/45356 bekannt.

Es werden dabei ionische und nicht ionische Emulgatoren (Surfactants) verwendet. Als ionische Emulgatoren werden die in-situ-Umsetzungsprodukte der in dem Verfahren verwendeten carboxylgruppenhaltigen Olefincopolymerisate mit Ammoniumhydroxid, Triethanolamin, Morpholin und Dimethylethanolamin eingesetzt. Bevorzugte nicht ionische Emulgatoren sind Alkylphenolthioxylate und Ethylenoxid-Propylenglykol-Copolymere. Die Oberflächenspannung wäßriger Lösungen der Emulgatoren bei der kritischen Micellbildungskonzentration (KMK) wird indes nicht angegeben.

Bei dem bekannten Verfahren werden die Ausgangsprodukte auf einem Extruder aufgeschmolzen und miteinander vermischt. Die Schmelze wird anschließend in einen Autoklaven eingetragen und darin emulgiert. Die Emulsionen der geschmolzenen Partikel werden danach unter Druck und bei Temperaturen oberhalb ihres Schmelzpunkts gerührt, um die Partikel kugelförmig zu machen. Nach Seite 4, Zeilen 20 bis 23, der internationalen Patentanmeldung werden hierfür mindestens 30 Sekunden benötigt. Das Verfahren kann kontinuierlich oder diskontinuierlich durchgeführt werden.

Ein vergleichbares Verfahren geht aus dem amerikanischen Patent US 4,056,653 A hervor. Gemäß Spalte 2, Zeilen 6 bis 9, des Patents werden für den besagten Verfahrenschritt ebenfalls mindestens 30 Sekunden benötigt.

Nachteilig für dieses bekannten Verfahren ist, daß es während der vergleichsweise langen Behandlungszeit schon bei geringen Veränderungen der Verfahrensbedingungen zu einer unerwünschten Agglomeration der geschmolzenen Partikel kommen kann. Außerdem ist es auf Copolymerisaten von Olefinen wie Ethylen beschränkt. Es wird nicht vorgeschlagen, die Herstellung der Bindemittel kontinuierlich durchzuführen und mit einem kontinuierlichen Verfahren zur Herstellung von Pulverslurries und Pulverlacken durch Schmelzeemulgierung zu integrieren.

Die vorstehend beschriebenen bekannten Verfahren zur Herstellung von Pulverlacken durch Schmelzeemulgierung weisen außerdem den Nachteil auf, daß die als Dispergieraggregate verwendeten Extruder einen vergleichsweise geringen Wirkungsgrad haben, so daß ein vergleichsweise hoher Energieeintrag notwendig ist, um eine homogene Schmelze zu erzeugen. Desweiteren können die angewandten Emulgatoren entweder nur die zunächst entstehenden emulgierten geschmolzenen Partikel oder die nach der Abkühlung der Emulsion resultierenden suspendierten festen Partikel nicht aber beide zugleich in ausreichendem Maße stabilisieren. Bei den bekannten Verfahren besteht daher die Gefahr, daß sie auch auf geringfügige Variationen der Verfahrensbedingungen nachteilig reagieren und keine spezifikationsgerechten Pulverlacke liefern.

Aus der internationalen Patentanmeldung WO 00/17256 ist noch ein weiteres Verfahren zur Herstellung von Pulverlacken durch Schmelzeemulgierung bekannt. Bei diesem Verfahren werden die Ausgangsprodukte, insbesondere die Bindemittel, unter superkritischen oder nahezu superkritischen Bedingungen in Fluiden wie Schwefelhexafluorid, Fluoroform und/oder Xenon dispergiert. Die Fluide werden so ausgewählt, daß die Bindemittel leicht angequollen werden. Außerdem wird die Dichte der Fluide durch Variation von Druck und Temperatur der Dichte der Ausgangsprodukte angepaßt. Voraussetzung hierfür sind die superkritischen oder nahezu superkritischen Bedingungen. Die Pulverlacke werden durch Druckentspannung gewonnen. Für dieses Verfahren sind teure druckdichte Anlagen und die Verwendung von Verbindungen notwendig, die bekanntermaßen einen ausgesprochen starken Treibhausgaseffekt hervorrufen (vgl. die internationale Patentanmeldung auf Seite 15, Zeilen 28 und 29). Außerdem kann das Verfahren nur diskontinuierlich durchgeführt werden.

Die Verwendung von Dispersionen von Copolymerisaten, die durch ein- oder mehrstufige radikalische Copolymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I

   **R**^{**1**}**R**^{**2**}**C=CR**^{**3**}**R**^{**4**} (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen;

in wäßrigen Medien herstellbar sind, als Bindemittel in Beschichtungsstoffen, insbesondere Wasserbasislacken (vgl. die deutsche Patentanmeldung DE 199 30 665 A 1), Füllern und Steinschlagschutzgrundierungen (vgl. die deutsche Patentanmeldung DE 199 30 067 A 1) und Klarlacken (vgl. die deutsche Patentanmeldung DE 199 30 664 A 1), ist bekannt. Ihre Verwendung als Stabilisatoren, Emulgatoren oder Dispergiermittel wird in den Patentanmeldungen nicht beschrieben.

Die kontinuierliche Herstellung von Bindemitteln durch Polymerisation von Monomeren in Masse ist aus der deutschen Patentanmeldung DE 198 28 742 A 1 bekannt. Die Bindemittel können in Pulverlacken oder Pulverslurries eingesetzt werden. Die Herstellung der Pulverlacke oder Pulverslurries durch Schmelzeemulgierung wird nicht beschrieben. Ebensowenig wird die Integration des kontinuierlichen Verfahrens der Herstellung der Bindemittel in ein kontinuierliches Verfahren zur Herstellung der Pulverlacke oder Pulverslurries durch Schmelzeemulgierung beschrieben.

Aufgabe der vorliegenden Erfindung ist es, ein neues kontinuierliches Verfahren zur Herstellung von Pulverlacksuspensionen (Pulverslurries) und Pulverlacken durch Emulgierung ihrer Bestandteile zu finden, das die Nachteile des Standes der Technik nicht mehr länger aufweist, sondern das in einfacher Weise zuverlässig und reproduzierbar mit kurzen Verweilzeiten in der betreffenden Anlage rasch spezifikationsgerechte Pulverslurries und Pulverlacke liefert.

Demgemäß wurde das neue kontinuierliche Verfahren zur Herstellung von Pulverlacksuspensionen (Pulverslurries) und Pulverlacken durch Emulgierung ihrer Bestandteile gefunden, bei dem man
(1) mindestens eine flüssige Komponente (A), die mindestens ein Bindemittel enthält oder hieraus besteht, in einem Reaktionsgefäß durch kontinuierliche Polymerisation, Polykondensation und/oder Polyaddition in Masse herstellt,
(2) die flüssige Komponente (A) kontinuierlich aus dem Reaktionsgefäß austrägt und in ein Mischaggregat fördert, worin man sie kontinuierlich mit mindestens einer flüssigen Komponente (B), die mindestens ein weiteres Ausgangsprodukt der Pulverslurries und Pulverlacke enthält oder hieraus besteht, vermischt, wodurch eine flüssige Komponente (C) resultiert und
(3) die flüssige Komponente (C) kontinuierlich in ein Dispergieraggregat fördert, worin man sie in einem kontinuierlich zugeführten wäßrigen Medium (D) emulgiert, wodurch eine wäßrige Emulsion (E) flüssiger Partikel resultiert,
   wonach man zur Herstellung der Pulverslurries (F)
(4) die Emulsion (E) abkühlen läßt, so daß sich eine Suspension (F) dimensionsstabiler Partikel bildet, und
   wonach man zur Herstellung der Pulverlacke (G) die dimensionsstabilen Partikel
(5) direkt aus der wäßrigen Emulsion (E) oder alternativ
(6) aus der Suspension (F) isoliert.

Im folgenden wird das neue Verfahren zur Herstellung von Pulverlacken durch Emulgierung als "erfindungsgemäßes Verfahren" bezeichnet.

Weitere erfindungsgemäße Gegenstände, Verfahren und Verwendungen gehen aus der Beschreibung hervor.

Im Hinblick auf den Stand der Technik war es überraschend und für den Fachmann nicht vorhersehbar, daß die Aufgabe, die der vorliegenden Erfindung zugrundelag, mit Hilfe der des erfindungsgemäßen Verfahrens gelöst werden konnte. Noch mehr überraschte, daß gerade die bisher nur als Bindemittel eingesetzten Copolymerisate aus den Monomeren (a) und (b) die erforderlichen Eigenschaften aufwiesen, um für das erfindungsgemäße Verfahren in Betracht zu kommen. Nicht zuletzt überraschte, daß das erfindungsgemäße Verfahren bei einem vergleichsweise niedrigen Energieeintrag und sehr kurzen Verweilzeiten auch ohne Nachbehandlung der emulgierten flüssigen Partikel spezifikationsgerechte Pulverslurries (F) und Pulverlacke (G) lieferte. Besonders hervorzuheben ist, daß das erfindungsgemäße Verfahren einen direkten Weg von den Monomeren der Bindemittel zu den fertigen Pulverslurries (F) und Pulverlacken (G) eröffnet, bei dem die Bindemittel nicht aus Lösungen durch Strippen oder aus Schmelzen durch Abkühlen isoliert und für das Emulgierungsverfahren aufbereitet werden müssen.

Die bei dem erfindungsgemäßen Verfahren eingesetzten Ausgangsprodukte für die Herstellung der Pulverslurries (F) und Pulverlacke (G) werden im Hinblick auf die gewünschte Zusammensetzung und den Mechanismus der Härtung der Pulverslurries (F) und Pulverlacke (G) ausgewählt.

Die Pulverslurries (F) und Pulverlacke (G) können physikalisch härtend sein.

Im Rahmen der vorliegenden Erfindung bedeutet der Begriff "physikalische Härtung" die Härtung einer Schicht aus Partikeln der Pulverslurries (F) und Pulverlacke (G) durch Verfilmung, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Die Pulverslurries (F) und Pulverlacke (G) können thermisch härtbar sein. Hierbei können sie selbstvernetzend oder fremdvernetzend sein.

Im Rahmen der vorliegenden Erfindung bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthalten sind, die für eine Vernetzung notwendig sind, oder reaktive funktionelle Gruppen, die "mit sich selbst" reagieren. Als fremdvemetzend werden dagegen solche Beschichtungsstoffe, bezeichnet, worin eine Art der komplementären reaktiven funktionellen Gruppen in dem Bindemittel und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Die Pulverslurries (F) und Pulverlacke (G) können mit aktinischer Strahlung härtbar sein.

Hierbei erfolgt die Härtung über Gruppen, die Bindungen enthalten, die mit aktinischer Strahlung aktivierbar sind. Im Rahmen der vorliegenden Erfindung ist unter aktinischer Strahlung elektromagnetische Strahlung, wie sichtbares Licht, UV-Strahlung oder Röntgenstrahlung, insbesondere UV-Strahlung, und Korpuskularstrahlung wie Elektronenstrahlung zu verstehen.

Die Pulverslurries (F) und Pulverlacke (G) können thermisch und mit aktinischer Strahlung härtbar sein.

Werden die thermische und die Härtung mit aktinischem Licht bei einer Pulverslurry (F) oder einem Pulverlack (G) gemeinsam angewandt, spricht man auch von "Dual Cure" und "Dual-Cure-Pulverlack (G) oder - Pulverslurry (F)".

Die Pulverslurries (F) und Pulverlacke (G) sind vorzugsweise Einkomponenten (1K)-Systeme.

Im Rahmen der vorliegenden Erfindung sind unter Einkomponenten (1K)-Systemen thermisch oder thermisch und mit aktinischer Strahlung härtende Pulverslurries (F) und Pulverlacke (G) zu verstehen, bei denen das Bindemittel und das Vernetzungsmittel nebeneinander in den Partikeln vorliegen. Voraussetzung hierfür ist, daß die beiden Bestandteile erst bei höheren Temperaturen und/oder bei Bestrahlen mit aktinischer Strahlung miteinander vernetzen.

Der Gehalt der Pulverslurries (F) an festen Partikeln kann sehr breit variieren und richtet sich nach den Erfordernissen des Einzelfalls. Vorzugsweise liegt er bei 5,0 bis 60, bevorzugt 10 bis 55, besonders bevorzugt 15 bis 50, ganz besonders bevorzugt 20 bis 45 und insbesondere 25 bis 40 Gew.-%, jeweils bezogen auf die Gesamtmenge der erfindungsgemäßen Pulverslurry (F).

Ebenso kann die mittlere Teilchengröße der dimensionsstabilen Partikel der Pulverslurries (F) breit variieren. Vorzugsweise liegt sie zwischen 0,1 und 100, bevorzugt 0,2 und 80, besonders bevorzugt 0,3 und 60, ganz besonders bevorzugt 0,4 und 40 und insbesondere 0,5 bis 20 µm. Für ganz besonders anspruchsvolle Verwendungszwecke wie die Kraftfahrzeugerstlackierung sind Partikelgrößen von 1 bis 10 µm von ganz besonderem Vorteil.

Die Größe der dimensionsstabilen Partikel der Pulverlacke (G) kann ebenfalls breit variieren. Vorzugsweise liegt sie zwischen 5 und 500, bevorzugt zwischen 5 und 400, besonders bevorzugt zwischen 5 und 300, ganz besonders bevorzugt 10 und 200 insbesondere 10 und 100 µm. Die mittlere Teilchengröße liegt vorzugsweise bei 10 bis 300, bevorzugt 10 bis 200, besonders bevorzugt 10 bis 150, ganz besonders bevorzugt 10 bis 100 und insbesondere 10 bis 50 µm. Dabei kann die Teilchengrößenverteilung eng oder breit sein. In den meisten Fällen ist eine enge Teilchengrößenverteilung, wie sie in den Patentanmeldungen und Literaturstellen EP 0 687 714 A 1, DE 42 04 266 A 1, DE 40 38 681 A 1, P. G. de Lange und P. Selier, »Korngrößenverteilung und Eigenschaften von elektrostatischen Spritzpulvern (1) - Fraktionierung des Pulvers und Charakterisierung der Fraktionen«, Farbe und Lack, 79.

Jahrgang, Nr. 5, 1973, Seiten 403 bis 412, P. G. de Lange und P. Selier, »Korngrößenverteilung und Eigenschaften von elektrostatischen Spritzpulvern (2) - Verhalten der Pulverfraktionen beim Spritzen und nach dem Einbrennen«, Farbe und Lack, 79. Jahrgang, Nr. 6, 1973, Seiten 509 bis 517, und EP 0 536 791 A 1 beschrieben werden, von Vorteil.

Im Rahmen der vorliegenden Erfindung bedeutet "dimensionsstabil", daß die Partikel unter den üblichen und bekannten Bedingungen der Lagerung und der Anwendung von Pulverlacken oder Pulverlacksuspensionen, wenn überhaupt, nur geringfügig agglomerieren und/oder in kleinere Teilchen zerfallen, sondern auch unter dem Einfluß von Scherkräften im wesentlichen ihre ursprünglichen Form bewahren. Dabei können die Partikel hochviskos und/oder fest sein. Vorzugsweise sind die dimensionsstabilen Partikel fest.

Die Pulverslurries (F) und Pulverlacke (G) sind vorzugsweise frei von flüchtigen organischen Verbindungen (Volatile Organic Compounds, VOC), insbesondere von organischen Lösemitteln (Cosolventien). Im Rahmen der vorliegenden Erfindung bedeutet dies, daß sie einen Restgehalt an VOC von < 1 Gew.-%, bevorzugt < 0,5 Gew.-% und besonders bevorzugt < 0,2 Gew.-% haben. Erfindungsgemäß ist es von ganz besonderem Vorteil, wenn der Restgehalt unterhalb der gaschromatographischen Nachweisgrenze liegt.

Das erfindungsgemäße Verfahren geht aus von der Herstellung mindestens einer flüssigen Komponente (A), die mindestens ein Bindemittel enthält oder hieraus besteht, in einem Reaktionsgefäß durch kontinuierliche Polymerisation, Polykondensation und/oder Polyaddition in Masse.

Zu den Begriffen Polymerisation, Polykondensation und Polyaddition sowie Bindemittel wird auf Römpp Lexikon Lacke und Druckfarben, Georg Thieme Verlag, Stuttgart, New York, 1998, Seite 457, »Polyaddition« und »Polyadditionsharze (Polyaddukte)«, Seiten 463 und 464, »Polykondensate«, »Polykondensation« und »Polykondensationsharze«, und Seiten 464 und 465, »Polymerisation«, »Polymerisationsharze« und »Polymerisationshilfsmittel«, sowie Seiten 73 und 74, »Bindemittel«, verwiesen.

Bei der kontinuierlichen Polymerisation, Polykondensation und/oder Polyaddition in Masse können noch zu 25 Gew.-%, bezogen auf die Gesamtmenge der Monomeren, mindestens einer niedermolekularen Verbindungen, ausgewählt aus der Gruppe, bestehend aus festen, flüssigen und gasförmigen niedermolekularen Verbindungen, zugegen sein. Die niedermolekularen Verbindungen dienen vor allem der Erniedrigung der Viskosität der flüssigen Komponente (A) und damit der Prozeßtemperatur. Vorzugsweise werden die niedermolekularen Verbindungen aus der Gruppe, bestehend aus organischen Lösemitteln oder Fluiden ausgewählt.

Beispiele geeigneter organischer Lösemittel und ihre Eigenschaften werden in dem Buch »Paints, Coatings and Solvents«, Edit. D. Stoye und W. Freitag, Wiley-VCH, Weinheim, New York, 1993, Kapitel »14. Solvents«, Seiten 277 bis 373, insbesondere Kapitel »14.9. Solvent Groups«, Seiten 327 bis 373, beschrieben. Beispiele geeigneter Fluide werden in der internationalen Patentanmeldung WO 00/17256, Seite 12, Tabelle 1, und Seite 14, Tabelle 2, beschrieben. Bei der Auswahl der organischen Lösemittel und Fluide ist darauf zu achten, daß sie die Polymerisation, Polyaddition und/oder Polykondensation nicht inhibieren. Im Hinblick darauf, daß die Pulverslurries (F) und Pulverlacke (G) vorzugsweise frei von VOC sein sollen, sollen sie sich - sofern leicht flüchtig - auch im Verlauf des erfindungsgemäßen Verfahrens weitgehend oder völlig aus den Pulverlacken (G) und Pulverslurries (F) entfernen lassen.

Das Bindemittel kann für sich selbst gesehen, physikalisch, thermisch, mit aktinischer Strahlung und thermisch und mit aktinischer Strahlung härtbar sein. Im allgemein ist es in den Partikeln in einer Menge von 5,0 bis 100, vorzugsweise 6,0 bis 95, bevorzugt 7,0 bis 90, besonders bevorzugt 8,0 bis 85, ganz besonders bevorzugt 9,0 bis 80 und insbesondere 10 bis 80 Gew.-%, jeweils bezogen auf die Gesamtmenge der Partikel, enthalten.

Vorzugsweise weist das Bindemittel eine Glasübergangstemperatur Tg von 0 bis 110, bevorzugt von 5 bis 100, besonders bevorzugt von 10 bis 90, ganz besonders bevorzugt von 15 bis 85 und insbesondere 20 bis 80 °C auf (gemessen mit Hilfe der Differential Scanning Calorimetrie (DSC)).

Das Molekulargewicht des Bindemittels kann sehr breit variieren. Erfindungsgemäß ist es bevorzugt, das Molekulargewicht des Bindemittels nicht allzu hoch zu wählen, weil ansonsten Probleme bei seiner kontinuierlichen Herstellung in Masse und seiner Verfilmung auftreten können. Vorzugsweise liegt das Molekulargewicht bei 500 bis 30.000, bevorzugt 500 bis 25.000, besonders bevorzugt 500 bis 20.000, ganz besonders bevorzugt 500 bis 15.000 und insbesondere 500 bis 10.000.

Die Bindemittel sind oligomere und polymere Harze. Unter Oligomeren werden Harze verstanden, die mindestens 2 bis 15 Monomereinheiten in ihrem Molekül enthalten. Im Rahmen der vorliegenden Erfindung werden unter Polymeren Harze verstanden, die mindestens 10 wiederkehrende Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Es ist von Vorteil, wenn die Mindestfilmbildetemperatur der Bindemittel im Bereich ihrer Glasübergangstemperatur Tg liegt und insbesondere mindestens 25 °C beträgt. Die Mindestfilmbildetemperatur kann ermittelt werden, indem die wäßrige Dispersion des Bindemittels mittels einer Rakel auf eine Glasplatte aufgezogen und auf einem Gradientenofen erwärmt wird. Die Temperatur, bei der die pulverförmige Schicht verfilmt, wird als Mindestfilmbildetemperatur bezeichnet. Ergänzend wird auf Römpp Lexikon Lacke und Druckfarben, Georg Thieme Verlag, Stuttgart, New York, 1998 »Mindestfilmbildetemperatur«, Seite 391, verwiesen.

Beispiele für geeignete Bindemittel sind statistisch, alternierend und/oder blockartig aufgebaute lineare und/oder verzweigte und/oder kammartig aufgebaute (Co)Polymerisate von olefinisch ungesättigten Monomeren, oder Polyadditionsharze und/oder Polykondensationsharze.

Beispiele geeigneter (Co)Polymerisate sind (Meth)Acrylat(co)polymerisate oder partiell verseifte Polyvinylester, vorzugsweise (Meth)Acrylatcopolymerisate, insbesondere (Meth)Acrylatcopolymerisaten (A), die aus der nachstehend beschriebenen olefinisch ungesättigten Monomeren (a) herstellbar sind.

Beispiele geeigneter Polyadditionsharze und/oder Polykondensationsharze sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester-Polyurethane.

Beispiele geeigneter Polyester und Alkydharze werden beispielsweise noch in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Resines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, beschrieben.

Beispiele geeigneter Polyurethane und/oder acrylierter Polyurethane werden beispielsweise in den Patentanmeldungen EP 0 708 788 A 1, DE 44 01 544 A 1 oder DE 195 34 361 A 1 beschrieben.

Von diesen Bindemitteln weisen die (Meth)Acrylat(co)polymerisate besondere Vorteile auf und werden deshalb besonders bevorzugt verwendet.

Die selbstvernetzenden Bindemittel der thermisch härtbaren erfindungsgemäßen Pulverlacke (G) enthalten reaktive funktionelle Gruppen, die mit Gruppen ihrer Art ("mit sich selbst") oder mit komplementären reaktiven funktionellen Gruppen Vernetzungsreaktionen eingehen können.

Die fremdvernetzenden Bindemittel enthalten reaktive funktionelle Gruppen, die mit komplementären reaktiven funktionellen Gruppen, die in Vernetzungsmitteln vorliegen, Vernetzungsreaktionen eingehen können.

Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R' und R" stehen für gleiche oder verschiedene aliphatische Reste oder sind miteinander zu einem aliphatischen oder heteroaliphatischen Ring verknüpft.

### Übersicht: Beispiele komplementärer funktioneller Gruppen

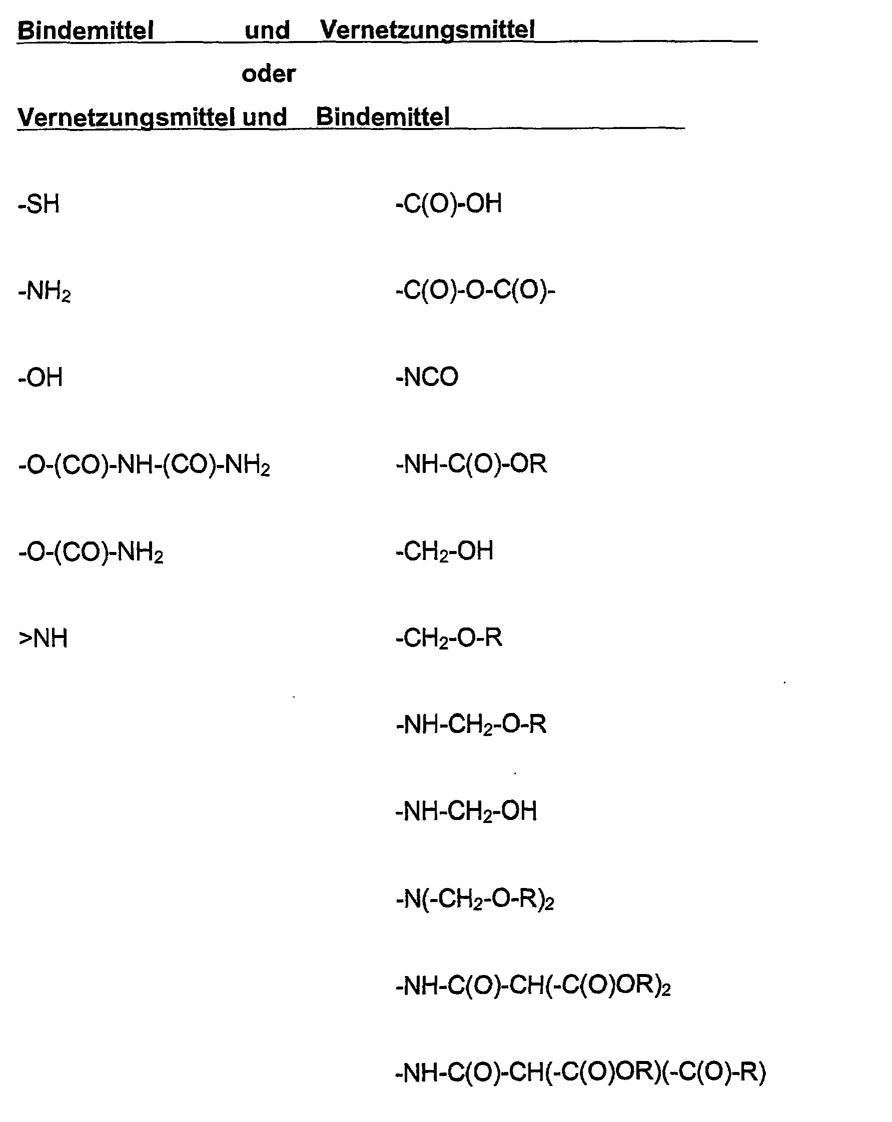

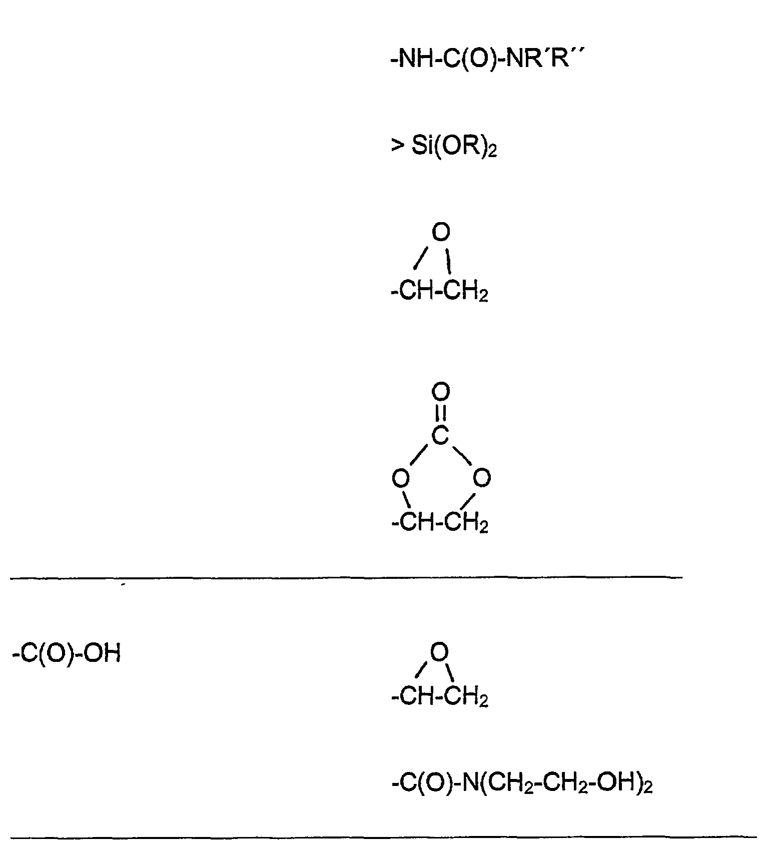

Die Auswahl der jeweiligen komplementären Gruppen richtet sich zum einen danach, daß sie bei der Herstellung der Bindemittel und in der flüssigen Komponente (A) sowie bei der Herstellung, der Lagerung, der Applikation und dem Aufschmelzen der Pulverslurries (F) und Pulverlacke (G) keine unerwünschten Reaktionen, insbesondere keine vorzeitige Vernetzung, eingehen und/oder gegebenenfalls die Härtung mit aktinischer Strahlung nicht stören oder inhibieren dürfen, und zum anderen danach, in welchem Temperaturbereich die Vernetzung stattfinden soll.

Vorzugsweise werden bei den Pulverslurries (F) und Pulverlacken (G) Vernetzungstemperaturen von 60 bis 180°C angewandt. Es werden daher vorzugsweise Bindemittel mit Thio-, Hydroxyl-, N-Methylolamino- N-Alkoxymethylamino-, Imino-, Carbamat-, Allophanat- und/oder Carboxylgruppen, bevorzugt Hydroxyl- oder Carboxylgruppen, einerseits und vorzugsweise Vernetzungsmittel mit Anhydrid-, Carboxyl-, Epoxy-, blockierten Isocyanat-, Urethan-, Methylol-, Methylolether-, Siloxan-, Carbonat-, Amino-, Hydroxy- und/oder beta-Hydroxyalkylamidgruppen, bevorzugt Epoxy-, beta-Hydroxyalkylamid-, blockierte Isocyanat-, Urethan- oder Alkoxymethylaminogruppen, andererseits angewandt.

Im Falle selbstvernetzender Pulverslurries (F) und Pulverlacke (G) enthalten die Bindemittel (A) insbesondere Methylol-, Methylolether- und/oder N-Alkoxymethylaminogruppen.

Komplementäre reaktive funktionelle Gruppen, die für die Verwendung in den Pulverslurries (F) und Pulverlacken (G) besonders gut geeignet sind, sind
- Carboxylgruppen einerseits und Epoxidgruppen und/oder beta-Hydroxyalkylamidgruppen andererseits sowie
- Hydroxylgruppen einerseits und blockierte Isocyanat-, Urethan- oder Alkoxymethylaminogruppen andererseits.

Die Funktionalität der Bindemittel (A) bezüglich der vorstehend beschriebenen reaktiven funktionellen Gruppen kann sehr breit variieren und richtet sich insbesondere nach der Vemetzungsdichte, die man erzielen will, und/oder nach der Funktionalität der jeweils angewandten Vernetzungsmittel. Beispielsweise liegt im Falle carboxylgruppenhaltiger Bindemittel (A) die Säurezahl vorzugsweise bei 10 bis 100, bevorzugt 15 bis 80, besonders bevorzugt 20 bis 75, ganz besonders bevorzugt 25 bis 70 und insbesondere 30 bis 65 mg KOH/g. Oder im Falle hydroxylgruppenhaltiger Bindemittel (A) liegt die OH-Zahl vorzugsweise bei 15 bis 300, bevorzugt 20 bis 250, besonders bevorzugz 25 bis 200, ganz besonders bevorzugt 30 bis 150 und insbesondere 35 bis 120 mg KOH/g. Oder im Falle epoxidgruppenhaltiger Bindemittel (A) liegt das Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und indesondere 440 bis 1.900.

Die vorstehend beschriebenen komplementären funktionellen Gruppen können nach den üblichen und bekannten Methoden der Polymerchemie in die Bindemittel (A) eingebaut werden. Dies kann beispielsweise durch den Einbau von Monomeren (a), die die entsprechenden reaktiven funktionellen Gruppen tragen, und/oder mit Hilfe polymeranaloger Reaktionen geschehen.

Beispiele geeigneter olefinisch ungesättigter Monomere (a) mit reaktiven funktionellen Gruppen sind die nachstehend beschriebenen Monomeren (a), insbesondere
(i) Monomere, welche mindestens eine Hydroxyl-, Amino-, Alkoxymethylamino-, Carbamat-, Allophanat- oder Iminogruppe pro Molekül tragen wie
   - Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat,-ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat,-monomethacrylat, -monoethacrylat, -monocrotonat,-monomaleinat, -monofumarat oder -monoitaconat; Umsetzungsprodukte aus cyclischen Estern, wie z.B. epsilon-Caprolacton und diesen Hydroxyalkyl- oder-cycloalkylestern;
   - olefinisch ungesättigte Alkohole wie Allylalkohol;
   - Polyole wie Trimethylolpropanmono- oder diallylether oder Pentaerythritmono-, -di- oder -triallylether;
   - Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
   - Aminoethylacrylat, Aminoethylmethacrylat, Allylamin oder N-Methyliminoethylacrylat;
   - N,N-Di(methoxymethyl)aminoethylacrylat oder -methacrylat oder N,N-Di(butoxymethyl)aminopropylacrylat oder-methacrylat;
   - (Meth)Acrylsäureamide wie (Meth)Acrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;
   - Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US-A-3,479,328, US-A-3,674,838, US-A-4,126,747, US-A- 4,279,833 oder US-A-4,340,497 beschrieben;
(ii) Monomere (a3), welche mindestens eine Säuregruppe pro Molekül tragen, wie
   - Acrylsäure, beta-Carboxyethylacrylat, Methacrylsäure, Ethacrylsäure, Crotonsäure, Maleinsäure, Fumarsäure oder Itaconsäure;
   - olefinisch ungesättigte Sulfon- oder Phosphonsäuren oder deren Teilester;
   - Maleinsäuremono(meth)acryloyloxyethylester, Bernsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzsolsulfonsäure (alle Isomere).
(iii) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Sie werden vorzugsweise zur Herstellung der erfindungsgemäß bevorzugten (Meth)Acrylatcopolymerisate (A), insbesondere der glycidylgruppenhaltigen, verwendet.

Höherfunktionelle Monomere (a) der vorstehend beschriebenen Art werden im allgemeinen in untergeordneten Mengen eingesetzt. Im Rahmen der vorliegenden Erfindung sind unter untergeordneten Mengen an höherfunktionellen Monomeren (a) solche Mengen zu verstehen, welche nicht zur Vernetzung oder Gelierung der Copolymerisate (A), insbesondere der (Meth)Acrylatcopolymerisate (A), führen, es sei denn, man will gezielt vernetzte polymere Mikroteilchen herstellen.

Beispiele geeigneter Monomereinheiten zur Einführung reaktiver funktioneller Gruppen in Polyester oder Polyester-Polyurethane (A) sind 2,2-Dimethylolethyl- oder -propylamin, die mit einem Keton blockiert sind, wobei die resultierende Ketoximgruppe nach dem Einbau wieder hydrolysiert wird; oder Verbindungen, die zwei Hydroxylgruppen oder zwei primäre und/oder sekundäre Aminogruppen sowie mindestens eine Säuregruppe, insbesondere mindestens eine Carboxylgruppe und/oder mindestens eine Sulfonsäuregruppe, enthalten, wie Dihydroxypropionsäure, Dihydroxybemsteinsäure, Dihydroxybenzoesäure, 2,2-Dimethylolessigsäure, 2,2-Dimethylolpropionsäure, 2,2-Dimethylolbuttersäure, 2,2-Dimethylolpentansäure, 2,2-Diaminovaleriansäure, 3,4-Diaminobenzoesäure, 2,4-Diaminotoluolsulfonsäure oder 2,4-Diamino-diphenylethersulfonsäure.

Ein Beispiel zur Einführung reaktiver funktioneller Gruppen über kontinuierliche polymeranaloge Reaktionen ist die Umsetzung Hydroxylgruppen enthaltender Harze mit Phosgen, wodurch Chlorformiatgruppen enthaltende Harze resultieren, und die polymeranaloge Umsetzung der Chlorformiatgruppen enthaltenden Harze mit Ammoniak und/oder primären und/oder sekundären Aminen zu Carbamatgruppen enthaltenden Harzen. Weitere Beispiele geeigneter Methoden dieser Art sind aus den Patentschriften US 4,758,632 A 1, US 4,301,257 A 1 oder US 2,979,514 A 1 bekannt. Außerdem ist es möglich, Carboxylgruppen durch die polymeranaloge Reaktion von Hydroxylgruppen mit Carbonsäureanhydriden, wie Maleinsäureanhydrid oder Phthalsäureanhydrid, einzuführen.

Die Bindemittel der Dual-Cure-Pulverslurries (F) und -Pulverlacke (G) enthalten desweiteren im statistischen Mittel mindestens eine, vorzugsweise mindestens zwei, Gruppe(n) mit mindestens einer mit aktinischer Strahlung aktivierbaren Bindung(en) pro Molekül.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor -oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Das Dual-Cure-Bindemittel enthält im statistischen Mittel mindestens eine der vorstehend beschriebenen mit aktinischer Strahlung aktivierbaren Gruppen. Dies bedeutet, daß die Funktionalität des Bindemittels in dieser Hinsicht ganzzahlig, d.h., beispielsweise gleich zwei, drei, vier, fünf oder mehr ist, oder nicht ganzzahlig, d.h., beispielsweise gleich 2,1 bis 10,5 oder mehr ist. Welche Funktionalität man wählt, richtet sich nach den Anforderungen, die an die jeweiligen Dual-Cure-Pulverslurries (F) und-Pulverlacke (G) gestellt werden.

Werden im statistischen Mittel mehr als eine mit aktinischer Strahlung aktivierbare Gruppe pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen verwendet werden, die sich von zwei, drei, vier oder mehr, insbesondere aber zwei, Monomerklassen ableiten.

Beispiele geeigneter Gruppen sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen.

Vorzugsweise sind die Gruppen über Urethan-, Harnstoff-, Allophanat-, Ester-, Ether- und/oder Amidgruppen, insbesondere aber über Estergruppen, an die jeweiligen Grundstrukturen der Bindemittel gebunden. Üblicherweise geschieht dies durch übliche und bekannte kontinuierliche polymeranaloge Reaktionen wie etwa die Reaktion von seitenständigen Glycidylgruppen mit den vorstehend beschriebenen olefinisch ungesättigten Monomeren, die eine Säuregruppe enthalten, von seitenständigen Hydroxylgruppen mit den Halogeniden dieser Monomeren, von Hydroxylgruppen mit Doppelbindungen enhaltenden Isocyanaten wie Vinylisocyanat, Methacryloylisocyanat und/oder 1-(1-Isocyanato-1-methylethyl)-3-(1-methylethenyl)-benzol (TMI® der Firma CYTEC) oder von Isocanatgruppen mit den vorstehend beschriebenen hydroxylgruppenhaltigen Monomeren.

Es können in den Partikeln indes auch Gemische aus rein thermisch härtbaren und rein mit aktinischer Strahlung härtbaren Bindemitteln angewandt werden.

Die stoffliche Zusammensetzung der Bindemittel weist im Grunde keine Besonderheiten auf, sondern es kommen
- all die in den US-Patentschrift US 4,268,542 A 1 oder US 5,379,947 A 1 und den Patentanmeldungen DE 27 10 421 A 1, DE 195 40 977 A 1, DE 195 18 392 A 1, DE 196 17 086 A 1, DE 196 13 547 A 1, DE 196 18 657 A 1, DE 196 52 813 A 1, DE 196 17 086 A 1, DE 198 14 471 A 1, DE 198 41 842 A 1 oder DE 198 41 408 A 1, den nicht vorveröffentlichten deutschen Patentanmeldungen DE 199 08 018.6 oder DE 199 08 013.5 oder der europäischen Patentschrift EP 0 652 264 A 1 beschriebenen, für die Verwendung in thermisch und/oder mit aktinischer Strahlung härtbaren Pulverklarlack-Slurries vorgesehenen Bindemittel,
- all die in den Patentanmeldungen DE 198 35 296 A 1, DE 197 36 083 A 1 oder DE 198 41 842 A 1 beschriebenen, für die Verwendung in Dual-Cure-Klarlacken vorgesehenen Bindemittel oder
- all die in der deutschen Patentanmeldung DE 42 22 194 A 1, der Produkt-Information der Firma BASF Lacke + Farben AG, "Pulverlacke (G)", 1990, oder der Firmenschrift von BASF Coatings AG "Pulverlacke (G), Pulverlacke (G) für industrielle Anwendungen", Januar, 2000 beschriebenen, für die Verwendung in thermisch härtbaren Pulverklarlacken vorgesehenen Bindemittel in Betracht.

Als zusätzliche Bindemittel für die Dual-Cure-Pulverslurries (F) und-Pulverlacke (G) kommen die in den europäischen Patentanmeldungen EP 0 928 800 A 1, EP 0 636 669 A 1, EP 0 410 242 A 1. EP 0 783 534 A 1. EP 0 650 978 A 1, EP 0 650 979 A 1, EP 0 650 985 A 1, EP 0 540 884 A 1, EP 0 568 967 A 1, EP 0 054 505 A 1 oder EP 0 002 866 A 1, den deutschen Patentanmeldungen DE 197 09 467 A 1, DE 42 03 278 A 1, DE 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373 A 1, US 4,675,234 A 1, US 4,634,602 A 1, US 4,424,252 A 1, 4,208,313 A 1, US 4,163,810 A 1, US 4,129,488 A1, US 4,064,161 A 1 oder US 3,974,303 A 1 beschriebenen, zur Verwendung in UV-härtbaren Klarlacken und Pulverklarlacken vorgesehenen Bindemittel in Betracht.

Von diesen Bindemitteln sind die epoxidgruppenhaltigen (Meth)Acrylatcopolymerisate mit einem Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und insbesondere 440 bis 1.900, einem zahlenmittleren Molekulargewicht (gelpermeationschromatographisch unter Verwendung eines Polystyrolstandards bestimmt) von vorzugsweise 2.000 bis 20.000 und insbesondere 3.000 bis 10.000, und einer Glasübergangstemperatur (T_{G}) von vorzugsweise 30 bis 80, bevorzugt 40 bis 70 und insbesondere 40 bis 60°C (gemessen mit Hilfe der differential scanning calometrie (DSC), wie sie insbesondere für die Verwendung in thermisch härtbaren Pulverkfarlack-Slurries in Betracht kommen (s.o.) und wie sie außerdem noch in den Patentschriften und Patentanmeldungen EP 0 299 420 A 1, DE 22 14 650 B 1, DE 27 49 576 B 1, US 4,091,048 A 1 oder US 3,781,379 A 1 beschrieben werden, besonders vorteilhaft und werden besonders bevorzugt verwendet.

Erfindungsgemäß erfolgt die Herstellung der Bindemittel sowie gegebenenfalls ihre nachträgliche Modifikation durch polymeranaloge Reaktionen kontinuierlich in Reaktionsgefäßen, wie sie üblicherweise bei der kontinuierlich in Polymerisation, Polykondensation oder Polyaddition angewandt werden. Beispiele geeigneter Reaktionsgefäße sind Rührkessel, Rührkesselkaskaden, Rohrreaktoren, Schlaufenreaktoren oder Taylorreaktoren, wie sie beispielsweise in der Patentschriften und den Patentanmeldungen DE 1 071 241 B 1, EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden. Hierbei weisen Taylorreaktoren Vorteile auf und werden deshalb besonders bevorzugt verwendet. Bei den Reaktionsgefäßen kann es sich auch um Überdruckgefäße handeln. Gegebenenfalls sind dann dem Reaktorausgang Vorrichtungen zur Druckminderung nachgeschaltet.

Bei der Herstellung der flüssigen Komponente(n) (A) durch Polymerisation, Polykondensation und/oder Polyaddition sowie gegebenenfalls durch nachträgliche Modifikation durch polymeranaloge Reaktionen werden die Prozeßtemperaturen so gewählt, daß (i) die Zersetzungstemperatur des Ausgangsprodukts, das sich am leichtesten zersetzt, (ii) die Depolymerisationstemperatur der Bindemittel sowie gegebenenfalls (iii) die Vernetzungstemperaturen von selbstvernetzenden Bindemitteln (A) nicht überschritten werden. Vorzugsweise werden Prozeßtemperaturen von 50 bis 250, bevorzugt 60 bis 220, besonders bevorzugt 70 bis 200, ganz besonders bevorzugt 80 bis 190 und insbesondere 90 bis 180 °C angewandt. Gegebenenfalls werden die Viskosität und die Prozeßtemperatur mit Hilfe der vorstehend beschriebenen organischen Lösemittel und/oder Fluiden abgesenkt.

Der Durchsatz der Ausgangsprodukte durch das Reaktionsgefäß kann sehr breit variieren und richtet sich vor allem nach der Reaktionsgeschwindigkeit der Polymerisation, Polyaddition und Polykondensation sowie gegebenenfalls nach der Reaktionsgeschwindigkeit der nachträglichen Modifikation durch polymeranaloge Reaktionen. Vorzugsweise wird der Durchsatz so eingestellt, daß die thermische Belastung der Ausgangsprodukte und der resultierenden Bindemittel möglichst gering ist. Im allgemeinen wird der Durchsatz so gewählt, daß die Verweilzeiten der Ausgangsprodukte und der resultierenden Bindemittel in den Reaktionszonen der Reaktionsgefäße bei 5 Sekunden bis 5 Stunden liegt.

Die flüssige Komponente (A) kann darüber hinaus noch mindestens einen der nachstehend beschriebenen Emulgatoren, Pigmente oder Zusatzstoffe enthalten. Die Zusatzstoffe können wie die Pigmente bei den angewandten Prozeßtemperaturen nicht flüssig sein. Allerdings muß ein solcher nichtflüssiger Zusatzstoff homogen in der Schmelze (A) verteilbar sein und darf nicht die Mischungsvorgänge im Mischaggregat oder im Dispergieraggregat stören. Vorzugsweise sind die Zusatzstoffe flüssig oder schmelzbar.

Im weiteren Verlauf des erfindungsgemäßen Verfahrens wird mindestens eine der vorstehend beschriebenen flüssigen Komponenten (A) kontinuierlich aus dem Reaktionsgefäß ausgetragen und in ein Mischaggregat gefördert. In den allermeisten Fällen genügt eine flüssige Komponente (A), um Pulverslurries (F) und Pulverlacke (G) mit hervorragenden anwendungstechnischen Eigenschaften herzustellen. Vorzugsweise befindet sich zwischen dem Ausgang des Reaktionsgefäßes und dem Eingang des Mischaggregats ein Pufferbehälter, mit dessen Hilfe Druck und/oder Dosierschwankungen, beispielsweise zwischen Monomeren und Initiatoren, aus dem Reaktionsgefäß ausgeglichen werden können und/oder Pigmente, Emulgatoren und/oder Zusatzstoffe in die flüssigen Komponenten (A) eingearbeitet werden können.

Erfindungsgemäß wird die flüssige Komponente (A) in dem Mischaggregat kontinuierlich mit mindestens einer, insbesondere einer, flüssigen Komponente (B) vermischt. Die flüssige Komponente (B) enthält mindestens ein weiteres Ausgangsprodukt der Pulverslurries (F) und der Pulverlacke (G) oder sie besteht hieraus.

Wird das erfindungsgemäße Verfahren zur Herstellung physikalisch härtender oder mit aktinischer Strahlung härtbarer Pulverslurries (F) und Pulverlacke (G) verwendet, handelt es sich bei mindestens einer der weiteren flüssigen Komponenten (B1, B2 bis Bn) oder bei der weiteren flüssigen Komponente (B) vorzugsweise um die Schmelze mindestens eines der nachstehend beschriebenen Zusatzstoffe. Darüber hinaus können diese flüssigen Komponenten (B) noch mindestens eines der nachstehend beschriebenen Pigmente und/oder mindestens einen der nachstehend beschriebenen Emulgatoren enthalten. Die betreffenden flüssigen Komponenten (B) werden dem Mischaggregat vorzugsweise in einer Menge und einer Geschwindigkeit zudosiert, daß sich in den Pulverslurries (F) und den Pulverlacken (G) der gewünschte Gehalt an Zusatzstoffen sowie gegebenenfalls Pigmenten und/oder Emulgatoren einstellt. Der Gehalt an Pigmenten und/oder Emulgatoren kann ebenfalls sehr breit variieren und richtet sich nach den Erfordernissen des Einzelfalls, insbesondere nach der Natur der Pigmente und/oder der Emulgatoren und dem technischen Effekten, die man hiermit einstellen will.

Wird das erfindungsgemäße Verfahren zur Herstellung thermisch oder thermisch und mit aktinischer Strahlung härtbarer Pulverslurries (F) und Pulverlacke (G) verwendet, handelt es sich bei mindestens einer der weiteren flüssigen Komponenten (B) oder bei der weiteren flüssigen Komponente (B) vorzugsweise um die Schmelze mindestens eines der nachstehend beschriebenen Vernetzungsmittel.

Beispiele geeigneter Vernetzungsmittel sind
- Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP 0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden,
- Carboxylgruppen enthaltende Verbindungen oder Harze, wie sie beispielsweise in der Patentschrift DE 196 52 813 A 1 oder 198 41 408 A 1 beschrieben werden, insbesondere 1,12-Dodecandisäure (1,10-Decandicarbonsäure),
- Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A 1 oder US 3,781,379 A 1 beschrieben werden,
- blockierte Polyisocyanate, wie sie beispielsweise in den Patentschriften US 4,444,954 A 1, DE 196 17 086 A 1, DE 196 31 269 A 1, EP 0 004 571 A 1 oder EP 0 582 051 A 1 beschrieben werden,
- beta-Hydroxyalkylamide wie N,N,N',N'-Tetrakis(2-hydroxyethyl)adipamid oder N,N,N',N'-Tetrakis(2-hydroxypropyl)-adipamid und/oder
- Tris(alkoxycarbonylamino)-triazine, wie sie in den Patentschriften US 4,939,213 A 1, US 5,084,541 A 1, US 5,288,865 A 1 oder EP 0 604 922 A 1 beschrieben werden.

Darüber hinaus können die flüssigen Vernetzungsmittel-Komponenten (B) noch mindestens eines der nachstehend beschriebenen Pigmente, mindestens einen der nachstehend beschriebenen, bei den Prozeßtemperaturen flüssigen oder festen Zusatzstoffe und/oder mindestens einen der nachstehend beschriebenen Emulgatoren enthalten. Der Gehalt an Pigmenten, Zusatzstoffen und/oder Emulgatoren kann ebenfalls sehr breit variieren und richtet sich nach den Erfordernissen des Einzelfalls, insbesondere nach der Natur der Pigmente, Zusatzstoffe und/oder Emulgatoren und den technischen Effekten, die man hiermit einstellen will.

Die betreffenden flüssigen Komponenten (B) werden dem Mischaggregat vorzugsweise in einer Menge und einer Geschwindigkeit zudosiert, daß sich in den Pulverslurries (F) und den Pulverlacken (G) der gewünschte Gehalt an den Vernetzungsmitteln einstellt. Der Gehalt kann ebenfalls sehr breit variieren und richtet sich nach den Erfordernissen des Einzelfalls, insbesondere nach der Anzahl der vorhandenen reaktiven funktionellen Gruppen und nach der Vernetzungsdichte, wie sie in den aus den Pulverslurries (F) und Pulverlacken (G) hergestellten Beschichtungen, Klebschichten und Dichtungen vorliegen sollen. Vorzugsweise liegt der Gehalt bei bei 1 bis 50, bevorzugt 2 bis 45, besonders bevorzugt 3 bis 40, ganz besonders bevorzugt 4 bis 35 und insbesondere 5 bis 30 Gew.-%, bezogen auf den Festkörper der Pulverslurries (F) und Pulverlacke (G).

Die Herstellung der flüssigen Komponenten (B) bietet keine methodischen Besonderheiten, sondern erfolgt mit Hilfe der üblichen und bekannten Verfahren und Vorrichtungen zur Herstellung von Schmelzen, wie Extruder, Rührkessel, Tayloreaktoren, Rohrreaktoren, Schlaufenreaktoren etc..

Bei der Verflüssigung werden die Prozeßtemperaturen so gewählt, daß die Zersetzungstemperatur des Ausgangsprodukts, das sich am leichtesten zersetzt, nicht überschritten wird. Vorzugsweise werden Prozeßtemperaturen von 50 bis 250, bevorzugt 60 bis 220, besonders bevorzugt 70 bis 200, ganz besonders bevorzugt 80 bis 190 und insbesondere 90 bis 180°C angewandt.

Bei dem erfindungsgemäßen Verfahrens werden die flüssigen Komponenten (A) und (B) in dem Mischaggregat in dem Mengenverhältnis, in dem ihre Bestandteile in den Pulverslurries (F) und den Pulverlacken (G) vorliegen sollen, kontinuierlich vermischt. Vorzugsweise haben die flüssigen Komponenten (A) und (B) jeweils so hohe Prozeßtemperaturen, daß bei dem Mischungsvorgang nicht die eine flüssige Komponente durch die andere soweit abgekühlt wird, daß sich feste Agglomerate bilden. Andererseits dürfen die Prozeßtemperaturen der flüssigen Komponenten (A) oder (B) nicht so hoch gewählt werden, daß die eine flüssige Komponente durch die andere soweit erhitzt wird, daß es beispielsweise zu Zersetzungsreaktionen kommt. Besonders bevorzugt haben die flüssigen Komponenten (A) und (B) bei dem Mischungsvorgang dieselbe oder in etwa dieselbe Prozeßtemperatur.

Als Mischaggregate kommen alle üblichen und bekannten Vorrichtungen zum Vermischen von Schmelzen in Betracht, wie Extruder, Rührkessel oder statische Mischer. Vorzugsweise werden statische Mischer verwendet. Beispiele geeigneter Mischer sind solche vom Typ Sulzer, die von der Firma Sulzer Chemtech GmbH vertrieben werden.

Vorzugsweise liegen die Verweilzeiten der flüssigen Komponenten im statischen Mischer bei 0,5 bis 20, bevorzugt 1 bis 18, besonders bevorzugt 1,5 bis 16, ganz besonders bevorzugt 1,5 bis 15 und insbesondere 1,5 bis 10 Sekunden.

Die flüssige Komponente (C), die aus dem Vermischen der vorstehend beschriebenen flüssigen Komponenten (A) und (B) resultiert, wird anschließend kontinuierlich einem Dispergieraggregat zugeführt, worin sie in einem wäßrigen Medium (D) emulgiert wird, so daß eine wäßrige Emulsion (E) flüssiger Partikel resultiert, die ggf. nichtflüssige Bestandteile enthält.

Das wäßrige Medium (D) enthält im wesentlichen Wasser oder besteht aus diesem. Hierbei kann das wäßrige Medium (D) in untergeordneten Mengen die nachstehend im Detail beschriebenen Zusatzstoffe und/oder organischen Lösemittel und/oder sonstige gelöste feste, flüssige oder gasförmige organische und/oder anorganische, nieder- und/oder hochmolekulare Stoffe enthalten, sofern diese nicht die Emulgierung in negativer Weise beeinflussen, indem sie etwa die Agglomeration der Partikel bewirken. Im Rahmen der vorliegenden Erfindung ist unter dem Begriff "untergeordnete Menge" eine Menge zu verstehen, welche den wäßrigen Charakter des wäßrigen Mediums (D) nicht aufhebt. Bei dem Zusatzstoffe enthaltenden wäßrigen Medium (D) kann es sich auch um die nachstehend beschriebenen Pigmentpasten oder Pigmentpräparationen handeln. Vorzugsweise enthält das wäßrige Medium (D) die nachstehend beschriebenen Copolymerisate auf der Basis der nachstehend beschriebenen Monomeren (a) und (b) als Emulgatoren.

Als Dispergieraggregate können alle üblichen und bekannten Dispergieraggregate, die für die Emulgierung von Flüssigkeiten in wäßrigen Medien geeignet sind, verwendet werden.

Beispiele geeigneter Dispergieraggregate sind Inline-Dissolver mit einem Rotor-Stator-Aufbau, wie sie beispielsweise in der deutsche Patentanmeldung DE 196 52 813 A 1, Spalte 8, Zeilen 19 bis 25, beschrieben werden, vorzugsweise Zahnkranz-Dispergieraggregate insbesondere mit mindestens einer zylindrischen Anordnung mindestens zweier auf Haltern sitzender, sich umschließender, relativ zueinander gegenläufig rotierbarer Zerkleinerungsorgankränze (Stator und Rotor) auf, wobei der sich durch die Relativbewegung zwischen dem Stator und Rotor ergebende Arbeitspalt Wände aufweist, die nicht-parallel zueinander verlaufen. Dabei ist es von Vorteil, wenn der Rotor im Sinne eines sich öffnenden Arbeitspaltes rotiert. Beispiele gut geeigneter Zahnkranz-Dispergieraggregate werden in der Patentschrift EP 0 648 537 A 1 im Detail beschrieben. Sie werden unter dem Handelsnamen "K-Generatoren" von der Firma Kinematica AG, Luzern, Schweiz, vertrieben.

Das Verhältnis von disperser Phase (flüssiger Komponente (C)) zu kontinuierlicher Phase (wäßriges Medium (D)) kann dabei breit variieren und richtet sich nach den Erfordernissen des Einzelfalls. Vorzugsweise wird das Volumenverhältnis von flüssiger Komponente (C) zu wäßrigem Medium (D) so gewählt, daß eine Emulsion (E) und eine Suspension (F) eines Festkörpergehalts von mindestens 10 Gew.-%, bevorzugt mindestens 15 Gew.-%, besonders bevorzugt mindestens 20 Gew.-%, ganz besonders bevorzugt mindestens 25 Gew.-% und insbesondere mindestens 30 Gew.-% resultiert.

Vorzugsweise liegen die Verweilzeiten der flüssigen Komponenten (C) und der wäßrigen Phase (D) bzw. der Emulsion (E) in dem Dispergieraggregat bei 0,5 bis 20, bevorzugt 1 bis 18, besonders bevorzugt 1,5 bis 16, ganz besonders bevorzugt 1,5 bis 15 und insbesondere 1,5 bis 10 Sekunden.

Nach der Emulgierung werden die resultierenden emulgierten flüssigen Partikel abgekühlt, wodurch suspendierte dimensionsstabile Partikel resultieren. Vorzugsweise wird die Emulsion (E) unmittelbar nach ihrer Herstellung ohne weitere Nachbehandlung abgekühlt. Hierbei werden vorzugsweise die in der DE 196 52 813 A 1, Spalte 8, Zeilen 9 bis 17, beschriebenen Methoden angewandt.

Durch die Abkühlung werden die flüssigen Partikel dimensionsstabil, wodurch eine Suspension (F) oder die Pulverslurry (F) resultiert.

Vor ihrer Applikation oder ihrer nachstehend beschriebenen Weiterverarbeitung zu den Pulverlacken (G) können die in erfindungsgemäßer Verfahrensweise erhaltenen Pulverslurries (F) mit Hilfe geeigneter Mahlaggregate, wie Rührwerksmühlen, auf die gewünschte Korngröße vermahlen werden. Anschließend oder anstelle der Vermahlung können die Pulverslurries (F) noch filtriert werden. Hierfür werden die üblichen und bekannten Filtrationsvorrichtungen und Filter verwendet. Die Maschenweite der Filter kann breit variieren und richtet sich in erster Linie nach der Teilchengröße und der Teilchengrößenverteilung der Partikel der Suspension (F). Der Fachmann kann daher die geeigneten Filter leicht anhand dieses physikalischen Parameters ermitteln. Beispiele geeigneter Filter sind Beutelfilter. Diese sind am Markt unter den Marken Pong® oder Cuno® erhältlich. Vorzugsweise werden Beutelfilter mit den Maschenweiten 10 bis 50 µm verwendet, beispielsweise Pong® 10 bis Pong® 50.

Zur Herstellung der Pulverlacke (G) werden die suspendierten dimensionsstabilen Partikel isoliert. Methodisch gesehen weist die Isolierung keine Besonderheiten auf sondern erfolgt mit Hilfe der üblichen und bekannten Vorrichtungen und Verfahren, wie sie beispielsweise bei der Filtration, der Sprühtrocknung oder der Gefriertrocknung angewandt werden. Gut geeignet sind Trocknungsverfahren, bei denen Rotationszerstäuber, Druckzerstäuber oder pneumatische Zerstäuber angewandt werden, wie sie in der internationalen Patentanmeldung WO 99/01499, Seite 5, Seite 24, bis Seite 7, Zeile 27, und Seite 27, Zeile 16, bis Seite 28, Zeile 19, beschrieben werden.

Alternativ zu der vorstehend beschriebenen Variante der Isolierung der dimensionsstabilen Partikel aus den Suspensionen (F), können die dimensionsstabilen Partikel auch aus den Emulsionen (E) der flüssigen Partikel gewonnen werden. Vorzugsweise geschieht dies durch Druckentspannung (Flashen), bei der sich die Emulsionen (E) aufgrund des Joule-Thomson-Effekts abkühlen, wobei zugleich die kontinuierliche Phase (D) verdampft. Zu diesem Zweck können übliche und bekannte Vorrichtungen, die Druckbehälter und evakuierte Behälter zum Auffangen der Pulverlacke (G) umfassen, angewandt werden.

Im Falle der Herstellung Pulverslurries (F) und Pulverlacke (G), die mit aktinischer Strahlung vernetzt werden können, ist es von Vorteil, unter Ausschluß aktinischer Strahlung zu arbeiten.

Vorzugsweise wird bei dem erfindungsgemäßen Verfahren mindestens ein Emulgator verwendet. Der Emulgator dient insbesondere der Stabilisierung der geschmolzenen Partikel der Emulsion (E) und der festen Partikel der Suspension (D). Der Emulgator kann den Schmelzen (A), den Schmelzen (B) oder den wäßrigen Medien (D) zugesetzt werden. Für das erfindungsgemäße Verfahren ist es von Vorteil, wenn der Emulgator in den wäßrigen Medien (D) vorliegt.

Hierbei kommen die üblichen und bekannten Emulgatoren in Betracht, wie sie beispielsweise in den eingangs zitierten Patentanmeldungen beschrieben werden. Weitere Beispiele für Emulgatoren sind nicht ionische Emulgatoren, wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen.

Bevorzugt wird für die Herstellung der Pulverslurries (F) und Pulverlacke (G) ein Emulgator verwendet, dessen wäßrige Lösung bei der kritischen Micellbildungskonzentration (KMK) eine Oberflächenspannung > 30, vorzugsweise > 35 und insbesondere > 40 mN/m hat.

Im Rahmen der vorliegenden Erfindung ist unter der kritischen Micellbildungskonzentration (KMK) die charakteristische Konzentration, bei der sich aus Tensid-Molekülen in wäßrigen Lösungen oberhalb einer bestimmten Temperatur (Krafft-Punkt) Micellen bilden, zu verstehen (vgl. Römpp-Chemie-Lexikon, Georg Thieme Verlag, Stuttgart, New York, 9. Auflage, 1991, Band 4, Seiten 2769 und 2770, »Micellen«).

Demgemäß kommen für die Herstellung der Pulverslurries (F) und Pulverlacke (G) alle ionischen und nichtionischen Emulgatoren in Betracht, die diese Voraussetzung erfüllen.

Besonders bevorzugt werden als Emulgatoren Copolymerisate eingesetzt, die durch ein- oder mehrstufige, insbesondere einstufige, radikalische, insbesondere kontrollierte radikalische, Copolymerisation von
(a) mindestens einem olefinisch ungesättigten Monomer und
(b) mindestens einem vom olefinisch ungesättigten Monomer (a) verschiedenen olefinisch ungesättigten Monomer der allgemeinen Formel I

   **R**^{**1**}**R**^{**2**}**C=CR**^{**3**}**R**^{**4**} (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen;

in einem wäßrigen Medien herstellbar sind.

Beispiele geeigneter Monomere (a) sind
(a1) im wesentlichen säuregruppenfreien (Meth)acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)acrylsäurederivate. Diese können in untergeordneten Mengen höherfunktionelle (Meth)Acrylsäurealkyl- oder-cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder-tetra(meth)acrylat enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate führen.
(a2) Monomere, welche mindestens eine Hydroxylgruppe, Aminogruppe, Alkoxymethylaminogruppe oder Iminogruppe pro Molekül tragen und im wesentlichen säuregruppenfrei sind, wie Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinsich ungesättigten Carbonsäure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat,-maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat,-monomethacrylat, -monoethacrylat, -monocrotonat, -monomaleinat, -monofumarat oder -monoitaconat; oder Umsetzungsprodukte aus cyclischen Estern, wie z.B. epsilon-Caprolacton und diesen Hydroxyalkyl- oder -cycloalkylestern; oder olefinisch ungesättigte Alkohole wie Allylalkohol oder Polyole wie Trimethylolpropanmono- oder diallylether oder Pentaerythritmono-, -di- oder -triallylether (hinsichtlich dieser höherfunktionellen Monomeren (a2) gilt das für die höherfunktionellen Monomeren (a1) Gesagte sinngemäß); N,N-Dimethylaminoethylacrylat, N,N-Diethylaminoethylmethacrylat, Allylamin oder N-Methyliminoethylacrylat oder N,N-Di(methoxymethyl)aminoethylacrylat und -methacrylat oder N,N-Di(butoxymethyl)aminopropylacrylat und -methacrylat.
(a3) Monomere, welche mindestens eine Säuregruppe, die in die entsprechende Säureaniongruppe überführbar ist, pro Molekül tragen, wie Acrylsäure, beta-Carboxyethylacrylat, Methacrylsäure, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremono(meth)acryloyloxyethylester, Bemsteinsäuremono(meth)acryloyloxyethylester oder Phthalsäuremono(meth)acryloyloxyethylester.
(a4) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester (a4) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic®-Säuren, eingesetzt.
(a5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird.
(a6) Cyclische und/oder acyclische Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
(a7) (Meth)Acrylsäureamide wie (Meth)Acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid. Monomere der letztgenannten Art werden vor allem für die Herstellung von selbstvernetzenden Bindemitteln (A) verwendet.
(a8) Epoxidgruppen enthaltende Monomere wie der Glycidylester der Acrylsäure, Methacrylsäure, Ethacrylsäure, Crotonsäure, Maleinsäure, Fumarsäure und/oder Itaconsäure.
(a9) Vinylaromatische Kohlenwasserstoffe wie Styrol, alpha-Alkylstyrole, insbesondere alpha-Methylstyrol, und/oder Vinyltoluol; Vinylbenzoesäure (alle Isomere), N,N-Diethylaminostyrol (alle Isomere), alpha-Methylvinylbenzoesäure (alle Isomere), N,N-Diethylamino-alpha-methylstyrol (alle Isomere) und/oder p-Vinylbenzsolsulfonsäure.
(a10) Nitrile wie Acrylnitril und/oder Methacrylnitril.
(a11) Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrrolidon; Unylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
(a12) Allylverbindungen, insbesondere Allylether und -ester wie Allylmethyl-, -ethyl-, -propyl- oder -butylether oder Allylacetat,-propionat oder -butyrat.
(a13) Polysiloxanmakromonomere, die ein zahlenmittleres Molekulargewicht Mn von 1.000 bis 40.000 und im Mittel 0,5 bis 2,5 olefinisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, olefinisch ungesättigte Doppelbindungen pro Molekül aufweisen, wie sie in der DE-A-38 07 571 auf den Seiten 5 bis 7, der DE-A 37 06 095 in den Spalten 3 bis 7 der EP-B-0 358 153 auf den Seiten 3 bis 6, in der US-A 4,754,014 in den Spalten 5 bis 9, in der DE-A 44 21 823 oder in der internationalen Patentanmeldung WO 92/22615 auf Seite 12, Zeile 18, bis Seite 18, Zeile 10, beschrieben sind.
   und/oder
(a14) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure (vgl. Monomere a2).

Jedes der vorstehend genannten Monomeren (a1) bis (a14) kann für sich alleine mit dem Monomeren (b) polymerisiert werden. Erfindungsgemäß ist es indes von Vorteil, mindestens zwei Monomere (a), insbesondere mindestens ein Monomer (a1) und mindestens ein Monomer (a3), zu verwenden, weil hierdurch das Eigenschaftsprofil der resultierenden Copolymerisate in besonders vorteilhafter Weise sehr breit variiert und dem jeweiligen erfindungsgemäßen Verfahren ganz gezielt angepaßt werden kann. Insbesondere können in dieser Weise in die Copolymerisate reaktive funktionelle Gruppen eingebaut werden, durch die die Copolymerisate in die aus den erfindungsgemäßen Pulverslurries (F) und Pulverlacke (G) hergestellten Beschichtungen, Klebschichten und Dichtungen einvernetzt werden können.

Als Monomere (b) werden Verbindungen der allgemeinen Formel I verwendet.

In der allgemeinen Formel I stehen die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, iso-Butyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan; Ethylencyclohexan oder Propan-1,3-diyl-cyclohexan.

Beispiele geeigneter Cycloalkylalkylreste sind 2-, 3- oder 4-Methyl-, -Ethyl-, -Propyl- oder -Butylcyclohex-1-yl.

Beispiele geeigneter Arylreste sind Phenyl, Naphthyl oder Biphenylyl.

Beispiele geeigneter Alkylarylreste sind Benzyl oder Ethylen- oder Propan-1,3-diyl-benzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-,-Propyl- oder -Butylphen-1-yl.

Beispiele geeigneter Arylcycloalkylreste sind 2-, 3- oder 4-Cyclohexylphen-1-yl.

Die vorstehend beschriebenen Reste R¹, R² , R³ und R⁴ können substituiert sein. Hierzu können elektronenziehende oder elektronenschiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; Hydroxylgruppen; und/oder primäre, sekundäre und/oder tertiäre Aminogruppen, insbesondere Amino, N-Methylamino, N-Ethylamino, N-Propylamino, N-Phenylamino, N-Cyclohexylamino, N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino.

Beispiele für erfindungsgemäß besonders bevorzugt verwendete Monomere (b) sind Diphenylethylen, Dinaphthalinethylen, cis- oder trans-Stilben, Vinyliden-bis(4-N,N-dimethylaminobenzol), Unyliden-bis(4-aminobenzol) oder Vinyliden-bis(4-nitrobenzol).

Erfindungsgemäß können die Monomeren (b) einzeln oder als Gemisch aus mindestens zwei Monomeren (b) verwendet werden.

Hinsichtlich der Reaktionsführung und der Eigenschaften der resultierenden Copolymerisate, insbesondere der Acrylatcopolymerisate, ist Diphenylethylen von ganz besonderem Vorteil und wird deshalb erfindungsgemäß ganz besonders bevorzugt verwendet.

Die erfindungsgemäß zu verwendenden Monomere (a) und (b) werden in Gegenwart mindestens eines radikalischen Initiators miteinander zu dem Copolymerisat umgesetzt. Als Beispiele für einsetzbare Initiatoren werden genannt: Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl- hexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether; oder eine Kombination eines nicht oxidierenden Initiators mit Wasserstoffperoxid.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a) und des Initiators, besonders bevorzugt 0,5 bis 50 Gew.-%, ganz besonders bevorzugt 1 bis 20 Gew.-% und insbesondere 2 bis 15 Gew.-% beträgt.

Vorzugsweise beträgt das Gewichtsverhältnis von Initiator zu den Monomeren (b) 4 : 1 bis 1 : 4, besonders bevorzugt 3 : 1 bis 1 : 3 und insbesondere 2 : 1 bis 1 : 2. Weitere Vorteile resultieren wenn der Initiator innerhalb der angegebenen Grenzen im Überschuß eingesetzt wird.

Vorzugsweise wird die radikalische Copolymerisation in den vorstehend genannten Vorrichtungen, insbesondere Rührkesseln oder Taylorreaktoren, durchgeführt, wobei die Taylorreaktoren so ausgelegt werden, daß auf der gesamten Reaktorlänge die Bedingungen der Taylorströmung erfüllt sind, selbst wenn sich die kinematische Viskosität des Reaktionsmediums aufgrund de Copolymerisation stark ändert, insbesondere ansteigt.

Die Copolymerisation wird in einem wäßrigen Medium durchgeführt.

Das wäßrige Medium enthält im wesentlichen Wasser oder besteht aus diesem. Hierbei kann das wäßrige Medium in untergeordneten Mengen die vorstehend im Detail beschriebenen Zusatzstoffe und/oder organischen Lösemittel und/oder sonstige gelöste feste, flüssige oder gasförmige organische und/oder anorganische, nieder- und/oder hochmolekulare Stoffe enthalten, sofern diese nicht die Copolymerisation in negativer Weise beeinflussen oder gar hemmen. Im Rahmen der vorliegenden Erfindung ist unter dem Begriff "untergeordnete Menge" eine Menge zu verstehen, welche den wäßrigen Charakter des wäßrigen Mediums nicht aufhebt.

Vorzugsweise wird die Copolymerisation in der Gegenwart mindestens einer Base durchgeführt. Besonders bevorzugt sind niedermolekulare Basen wie Natronlauge, Kalilauge, Ammoniak, Diethanolamin, Triethanolamin, Mono-, Di- und Triethylamin, und/oder Dimethylethanolamin, insbesondere Ammoniak und/oder Di- und/oder Triethanolamin.

Die Copolymerisation wird vorteilhafterweise bei Temperaturen oberhalb der Raumtemperatur und unterhalb der niedrigsten Zersetzungstemperatur der jeweils verwendeten Monomeren durchgeführt, wobei bevorzugt ein Temperaturbereich von 10 bis 150°C, ganz besonders bevorzugt 70 bis 120°C und insbesondere 80 bis 110 °C gewählt wird.

Bei Verwendung besonders leicht flüchtiger Monomeren (a) und/oder (b) kann die Copolymerisation auch unter Druck, vorzugsweise unter 1,5 bis 3.000 bar, bevorzugt 5 bis 1.500 und insbesondere 10 bis 1.000 bar mit durchgeführt werden.

Hinsichtlich der Molekulargewichtsverteilungen ist das Copolymerisat keinerlei Beschränkungen unterworfen. Vorteilhafterweise wird aber die Copolymerisation so geführt, daß eine Molekulargewichtsverteilung Mw/Mn gemessen mit Gelpermeationschromatographie unter Verwendung von Polystyrol als Standard von ≤ 4, vorzugsweise sonders bevorzugt ≤ 2 und insbesondere ≤ 1,5 sowie in einzelnen Fällen auch ≤ 1,3 resultiert. Die Molekulargewichte der Bestandteile (A) sind durch die Wahl des Verhältnisses von Monomer (a) zu Monomer (b) zu radikalischem Initiator in weiten Grenzen steuerbar. Dabei bestimmt insbesondere der Gehalt an Monomer (b) das Molekulargewicht, und zwar derart, daß je größer der Anteil an Monomer (b) ist, desto geringer ist das erhaltene Molekulargewicht.

Das durch die Copolymerisation resultierende Copolymerisat fällt als Gemisch mit dem wäßrigen Medium in der Regel in der Form einer Dispersion an. Es kann in dieser Form direkt als Emulgator eingesetzt oder auch als Feststoff isoliert und dann seiner Verwendung im erfindungsgemäßen Verfahren zugeführt werden.

Dabei kann der Emulgator, insbesondere als Feststoff, in die flüssigen Komponenten (A) und/oder (B) und/oder, insbesondere als Dispersion, in die wäßrigen Medien (D) eingetragen werden. Vorzugsweise wird er in Form einer Dispersion in die wäßrigen Medien (D) eingetragen.

In einer besonders bevorzugten Ausführungsform des erfindungsgemäßen Verfahrens, die vor allem bei der Herstellung von pigmentierten Pulverslurries (F) und Pulverlacken (G) angewandt wird, wird der besonders bevorzugte Emulgator über mindestens eine der nachstehend beschriebenen Pigmentpasten oder Pigmentpräparationen in die wäßrigen Medien (D) eingetragen. Oder aber die betreffenden Pigmentpasten oder Pigmentpräparationen bilden das wäßrige Medium (D).

Die Menge der Emulgatoren, die bei dem erfindungsgemäßen Verfahren eingesetzt wird, kann stark variieren und richtet sich nach den Erfordernissen des Einzelfalls. So können sie in den vom Stand der Technik her bekannten, für Emulgatoren üblichen Mengen verwendet werden. Vorzugsweise werden sie in einer Menge von 0,01 bis 5,0, bevorzugt 0,02 bis 4,5, besonders bevorzugt 0,03 bis 4, ganz besonders bevorzugt 0,04 bis 3,5 und insbesondere 0,05 bis 3 Gew.-%, jeweils bezogen auf die Menge der geschmolzenen oder festen Partikel und der Emulgatoren, eingesetzt.

Je nach Verwendungszweck der Pulverslurries (F) und Pulverlacke (G) können sie farb- und/oder effektgebende, fluoreszierende, elektrisch leitfähige und/oder magnetisch abschirmende Pigmente, Metallpulver, organische und anorganische, transparente oder opake Füllstoffe und/oder Nanopartikel (zusammenfassend "Pigmente" genannt) enthalten. Die Pigmente werden verwendet, wenn die Pulverslurries (F) und Pulverlacke (G) als pigmentierte Beschichtungsstoffe, Klebstoffe und Dichtungsmassen eingesetzt werden sollen.

Vorzugsweise werden sie bei dem erfindungsgemäßen Verfahren in der Form von Pigmentpasten oder Pigmentpräparationen (vgl. Römpp Lexikon Lacke und Druckfarben, Georg Thieme Verlag, Stuttgart, New York, 1998, Pigmentpräparationen «, Seite 452) in die wäßrigen Medien (D) eindispergiert oder sie bilden, wie vorstehend bereits erwähnt, die wäßrigen Medien (D). Bevorzugt enthalten sie die vorstehend beschriebenen Emufgatoren.

In einer Ausführungsform des erfindungsgemäßen Verfahrens enthalten die emulgierten oder suspendierten Partikel mindestens ein Pigment; d.h., die Gesamtmenge der eingesetzten Pigmente befindet sich auf und/oder in den Partikeln.

In einer weiteren Ausführungsform des erfindungsgemäßen Verfahrens enthalten die emulgierten oder suspendierten Partikel kein Pigment; d.h. alle Pigmente liegen als separate feste Phase vor. Für deren Teilchengröße gilt das vorstehend Gesagte sinngemäß.

In noch einer weiteren Ausführungsform des erfindungsgemäßen Verfahrens enthalten die emulgierten oder suspendierten Partikel im vorstehend geschilderten Sinne einen Teil der eingesetzen Pigmente, wogegen der andere Teil der Pigmente als separate feste Phase vorliegt. Hierbei kann es sich bei dem auf und/oder in den Partikeln vorliegenden Anteil um die Hauptmenge, d.h. um mehr als 50% der eingesetzten Pigmente handeln. Es könnnen sich indes auch weniger als 50% in den Partikeln befinden. Hinsichtlich der Teilchengrößen gilt das vorstehend Gesagte auch hier sinngemäß.

Welcher Variante des erfindungsgemäßen Verfahrens bei der Herstellung der pigmentierten Pulverslurries (F) und Pulverlacke (G) der Vorzug gegeben wird, richtet sich insbesondere nach der Natur der Pigmente und ihrer Funktionen. Besonders bevorzugt wird die Variante, bei der alle oder der überwiegende Anteil der Pigmente auf und/oder in den emulgierten und suspendierten Partikeln vorliegt, angewandt.

Beispiele geeigneter Effektpigmente sind Metallplättchenpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A 1, DE 37 18 446 A 1, DE 37 19 804 A 1, DE 39 30 601 A1, EP 0 068 311 A 1, EP 0 264 843 A 1, EP 0 265 820 A 1, EP 0 283 852 A 1, EP 0 293 746 A 1, EP 0 417 567 A 1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »Azomethin-Pigmente«, »Azopigmente«, und Seite 379, »Metallkomplex-Pigmente«, verwiesen.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele für geeignete Metallpulver sind Pulver aus Metallen und Metallegierungen Aluminium, Zink, Kupfer, Bronze oder Messing.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Poylamid oder Polyacrlynitril. Ergänzend wird auf Römpp Lexikon Lacke und Druckfarben, Georg Thieme Verlag, 1998, Seiten 250 ff., »Füllstoffe«, verwiesen.

Vorzugsweise werden Glimmer und Talkum angewandt, wenn die Kratzfestigkeit der aus den erfindungsgemäßen Pulverlacke (G)n hergestellten Beschichtungen verbessert werden soll.

Außerdem ist es von Vorteil, Gemische von plättchenförmigen anorganischen Füllstoffen wie Talk oder Glimmer und nichtplättchenförmigen anorganischen Füllstoffen wie Kreide, Dolomit Calciumsulfate, oder Bariumsulfat zu verwenden, weil hierdurch die Viskosität und das Fließverhalten sehr gut eingestellt werden kann.

Beispiele geeigneter transparenter Füllstoffe sind solche auf der Basis von Siliziumdioxid, Aluminiumoxid oder Zirkoniumoxid.

Geeignete Nanopartikel werden ausgewählt aus der Gruppe, bestehend aus hydrophilen und hydrophoben, insbesondere hydrophilen, Nanopartikeln auf der Basis von Siliziumdioxid, Aluminiumoxid, Zinkoxid, Zirkoniumoxid und der Polysäuren und Heteropolysäuren von Übergangsmetallen, vorzugsweise von Molybdän und Wolfram, mit einer Primärartikelgröße < 50 nm, bevorzugt 5 bis 50 nm, insbesondere 10 bis 30 nm. Vorzugsweise haben die hydrophilen Nanopartikel keinen Mattierungseffekt. Besonders bevorzugt werden Nanopartikel auf der Basis von Siliziumdioxid verwendet.

Ganz besonders bevorzugt werden hydrophile pyrogene Siliziumdioxide verwendet, deren Agglomerate und Aggregate eine kettenförmige Struktur haben und die durch die Flammenhydrolyse von Siliziumtetrachlorid in einer Knallgasflamme herstellbar sind. Diese werden beispielweise von der Firma Degussa unter der Marke Aerosil ® vertrieben. Ganz besonders bevorzugt werden auch gefällte Wassergläser, wie Nanohektorite, die beispielsweise von der Firma Südchemie unter der Marke Optigel ® oder von der Firma Laporte unter der Marke Laponite ® vertrieben werden, verwendet.

Die Pigmentpasten oder Pigmentpräparationen können bei Verwendung der vorstehend beschriebenen, besonders bevorzugt verwendeten Emulgatoren einen besonders hohen Gehalt von Nanopartikeln haben, was ein weiterer wertvoller Vorteil dieser Emulgatoren ist.

Die Pulverslurries (F) und Pulverlacke (G) können zusätzlich zu den vorstehend beschriebenen Emulgatoren und Pigmenten oder anstelle von diesen molekulardispers verteilte organische Farbstoffe als Zusatzstoffe enthalten.

Bei dem erfindungsgemäßen Verfahren können die organischen Farbstoffe als separate Schmelzen oder in den Schmelzen (A) und/oder (B) dem statischen Mischer zugeführt werden und/oder sie können in den vorstehend beschriebenen wäßrigen Medien (D) vorliegen.

Die molekulardispers verteilten Farbstoffe können bei dem erfindungsgemäßen Verfahren entweder in den emulgierten oder suspendierten Partikeln oder in der kontinuierlichen Phase, d. h. dem wäßrigen, Medium (D), vorhanden sein. Sie können indes auch in den Partikeln oder in der kontinuierlichen Phase (D) vorliegen. Hierbei kann es sich bei dem in den Partikeln vorliegenden Anteil um die Hauptmenge, d.h. um mehr als 50% der eingesetzten organischen Farbstoffe handeln. Es könnnen sich indes auch weniger als 50% in den Partikeln befinden. Die Verteilung der organischen Farbstoffe zwischen den Phasen kann dem thermodynamischen Gleichgewicht entsprechen, das aus der Löslichkeit der organischen Farbstoffe in den Phasen resultiert. Die Verteilung kann aber auch weit von dem thermodynamischen Gleichgewicht entfernt liegen. Bevorzugt sind die Farbstoffe nur in den emulgierten und suspendierten Partikel enthalten.

Geeignet sind alle organischen Farbstoffe, die in den Pulverslurries (F) und Pulverlacken (G) im vorstehend geschilderten Sinne löslich sind. Gut geeignet sind lichtechte organische Farbstoffe. Besonders gut geeignet sind lichtechte organische Farbstoffe mit einer geringen oder nicht vorhandenen Neigung zur Migration aus den aus den Pulverslurries (F) und Pulverlacken (G) hergestellten Beschichtungen, Klebschichten und Dichtungen. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Der Gehalt der Pulverslurries (F) und Pulverlacke (G) an den molekulardispers verteilten organischen Farbstoffen kann außerordentlich breit variieren und richtet sich in erster Linie nach der Farbe und dem Buntton, der eingestellt werden soll, sowie nach der Menge der gegebenenfalls vorhandenen Pigmente.

Die pigmentierten und nicht pigmentierten Pulverslurries (F) und Pulverlacke (G) können noch mindestens einen weiteren Zusatzstoffe enthalten. Dieser kann im Rahmen des erfindungsgemäßen Verfahrens als separate flüssige Komponente (B) dem Mischaggregat zugeführt werden. Er kann aber auch über die flüssige Komponente (A), die flüssigen Vernetzungsmittel-Komponenten (B) und/oder die wäßrigen Medien (D) in die Pulverslurries (F) und Pulverlacke (G) eingearbeitet werden. Je nach seiner Funktion kann der weitere Zusatzstoff in der dispersen Phase und/oder in der kontinuierlichen Phase der Pulverslurries (F) vorliegen.

Beispiele geeigneter weiterer Zusatzstoffe sind UV-Absorber, Antioxidantien, Lichtschutzmittel, Radikalfänger, Entlüftungsmittel, Netzmittel, Slipadditive, Polymerisationsinhibitoren, Katalysatoren für die Vernetzung, thermolabile radikalische Initiatoren, Photoinitiatoren, thermisch härtbare Reaktiverdünner, mit aktinischer Strahlung härtbare Reaktiwerdünner, Haftvermittler, Verlaufmittel, filmbildende Hilfsmittel, Rheologiehilfsmittel (Verdicker), Flammschutzmittel, Korrosionsinhibitoren, Rieselhilfen, Wachse, Sikkative, Biozide und/oder Mattierungsmittel.

Beispiele geeigneter thermisch härtbarer Reaktiverdünner sind stellungsisomere Diethyloctandiole oder Hydroxylgruppen enthaltende hyperverzweigte Verbindungen oder Dendrimere, wie sie in den deutschen Patentanmeldungen DE 198 09 643 A 1, DE 198 40 605 A 1 oder DE 198 05 421 A 1 beschrieben werden.

Beispiele geeigneter mit aktinischer Strahlung härtbarer Reaktiwerdünner sind die in Römpp Lexikon Lacke und Druckfarben, Georg Thieme Verlag, Stuttgart, New York, 1998, auf Seite 491 unter dem Stichwort »Reaktivverdünner« beschriebenen.

Beispiele geeigneter Lichtschutzmittel sind HALS-Verbindungen, Benztriazole oder Oxalanilide.

Beispiele geeigneter Antioxidantien sind Hydrazine und Phosphorverbindungen.

Beispiele geeigneter Polymerisationsinhibitoren sind organische Phosphite oder 2,6 Di-tert-Butylphenol-Derivate.

Beispiele geeigneter thermolabiler radikalischer Initiatoren sind Dialkylperoxide, Hydroperoxide, Perester, Azodinitrile oder C-C-spaltende Initiatoren.

Beispiele geeigneter Photoinitiatoren werden in Römpp Chemie Lexikon, 9. erweiterte und neubearbeitete Auflage, Georg Thieme Verlag Stuttgart, Bd. 4, 1991, oder in Römpp Lexikon Lacke und Druckfarben, Georg Thieme Verlag Stuttgart, 1998, Seiten 444 bis 446, beschrieben.

Beispiele geeigneter Katalysatoren für die Vernetzung sind Wismutlactat,-citrat, -ethylhexanoat oder -dimethylolpropionat Dibutylzinndilaurat, Lithiumdecanoat oder Zinkoctoat, mit Aminen blockierte organische Sulfonsäuren, quarternäre Ammoniumverbindungen, Amine, Imidazol und Imidazolderivate wie 2-Styrylimidazol, 1-Benzyl-2-methylimidazol, 2-Methylimidazol und 2-Butylimidazol, wie in dem belgischen Patent Nr. 756,693 beschrieben werden, oder Phosphonium-Katalysatoren wie Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex, wie sie beispielsweise in den US-Patentschriften US 3,477,990 A oder US 3,341,580 A beschrieben werden.

Beispiele geeigneter Entlüftunsmittel sind Diazadicycloundecan oder Benzoin.

Beispiele geeigneter Netzmittel sind Siloxane, fluorhaltige Verbindungen, Carbonsäurehalbester, Phosphorsäureester, Polyacrylsäuren und deren Copolymere oder Polyurethane.

Ein Beispiel für einen geeigneten Haftvermittler ist Tricyclodecandimethanol.

Beispiele für geeignete filmbildende Hilfsmittel sind Cellulose-Derivate.

Beispiel geeigneter Rheologiehilfsmittel (Verdicker) sind die aus den Patentschriften WO 94/22968, EP 0 276 501 A 1, EP 0 249 201 A 1 oder WO 97/12945 bekannten; vernetzte polymere Mikroteilchen, wie sie beispielsweise in der EP 0 008 127 A 1 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane, wie sie beispielsweise in der Patentschrift DE 196 52 813 A 1, Spalte 5, Zeilen 28 bis 59, beschrieben werden, oder Polyacrylate.

Ein Beispiel für ein geeignetes Mattierungsmittel ist Magnesiumstearat.

Weitere Beispiele für die vorstehend aufgeführten Zusatzstoffe sowie Beispiele geeigneter Verlaufmittel, Flammschutzmittel, Sikkative, Trocknungsmittel, Hautverhinderungsmittel, Korrosionsinhibitoren, Biozide und Wachse werden in dem Lehrbuch »Lackadditive« von Johan Bieleman, Wiley-VCH, Weinheim, New York, 1998, im Detail beschrieben.

Ansonsten kommen noch niedrigsiedende und hochsiedende ("lange") organische Lösemittel, wie sie üblicherweise auf dem Gebiet der Beschichtungsstoffe verwendet werden, als Zusatzstoffe in Betracht. Im Hinblick darauf, daß die erfindungsgemäßen Pulverslurries (F) und Pulverlacke (G) vorzugsweise frei von VOC sind, werden die organischen Lösemittel nur ausnahmsweise eingesetzt.

Die Pulverlacke (G) haben eine hervorragende Fluidität, Lagerfähigkeit und Transportfähigkeit und zeigen auch bei längerer Lagerung kein Verbacken. Die Applikationsverhalten ist hervorragend. Sie eignen sich hervorragend als Beschichtungsstoffe, Klebstoffe und Dichtungsmassen oder zu deren Herstellung.

Die Pulverslurries (F) weisen eine hervorragende Stabilität und Lagerfähigkeit und ein hervorragendes Applikationsverhalten auf.

Die Beschichtungsstoffe sind hervorragend für die Herstellung von ein- oder mehrschichtigen, farb- und/oder effektgebenden, elektrisch leitfähigen, magnetisch abschirmenden oder fluoreszierenden Beschichtungen, wie Füllerlackierungen, Basislackierungen, Unidecklackierungen oder Kombinationseffektschichten, oder von ein- oder mehrschichtigen Klarlackierungen geeignet.

Die Klebstoffe sind hervorragend für die Herstellung von Klebschichten, und die erfindungsgemäßen Dichtungsmassen sind hervorragend für die Herstellung von Dichtungen geeignet.

Ganz besondere Vorteile resultieren bei der Verwendung der nicht pigmentierten Pulverslurries (F) und Pulverlacke (G) als Klarlacke für die Herstellung von ein- oder mehrschichtigen Klarlackierungen. Insbesondere werden die Klarlacke zur Herstellung von farb- und/oder effektgebenden Mehrschichtlackierungen nach dem naß-in-naß Verfahren verwendet, bei dem ein Basislack, insbesondere ein Wasserbasislack, auf die Oberfläche eines Substrats appliziert wird, wonach man die resultierende Basislackschicht, ohne sie auszuhärten, trocknet und mit einer Klarlackschicht überschichtet. Anschließend werden die beiden Schichten gemeinsam gehärtet.

Ganz besondere Vorteile resultieren desweiteren bei der Verwendung der pigmentierten Pulverslurries (F) und Pulverlacke (G) für die Herstellung ein- oder mehrschichtiger farb- und/oder effektgebender Lackierungen oder von Kombinationseffektschichten. Unter einer Kombinationseffektschicht ist eine Lackierung zu verstehen, die in einer farb- und/oder effektgebenden Lackierung mindestens zwei Funktionen erfüllt. Funktionen dieser Art sind insbesondere der Schutz vor Korrosion, die Haftvermittlung, die Absorption mechanischer Energie und die Farb- und/oder Effektgebung. Vorzugsweise dient die Kombinationseffektschicht der Absorption mechanischer Energie sowie der Farb- und/oder Effektgebung zugleich; sie erfüllt also die Funktionen einer Füllerlackierung oder Steinschlagschutzgrundierung und einer Basislackierung. Vorzugsweise hat die Kombinationseffektschicht darüber hinaus noch Korrosionsschutzwirkung und/oder haftvermittelnde Wirkung.

Die pigmentierten Beschichtungen oder Lackierungen können ebenfalls mit Hilfe von Naß-in-naß-Verfahren hergestellt werden. Beispielsweise können die pigmentierten Pulverslurries (F) und Pulverlacke (G) auf nicht oder nicht vollständig gehärtete Elektrotauchlackschichten appliziert werden, wonach man die übereinanderliegenden Schichten gemeinsam härtet.

Der ganz besondere Vorteil der Pulverslurries (F) und Pulverlacke (G) liegt darin, daß mit ihrer Hilfe Mehrschichtlackierungen aller Art erzeugt werden können, die völlig oder überwiegend auf den Pulverslurries (F) und Pulverlacken (G) basieren.

Auch die Applikation der Pulverlacke (G) weist keine methodischen Besonderheiten auf, sondern erfolgt beispielsweise nach den üblichen und bekannten Wirbelschichtverfahren, wie sie beispielsweise aus den Firmenschriften von BASF Coatings AG, »Pulverlacke (G), für industrielle Anwendungen«, Januar 2000, oder »Coatings Partner, Pulverlack Spezial«, 1/2000, oder Römpp Lexikon Lacke und Druckfarben, Georg Thieme Verlag, Stuttgart, New York, 1998, Seiten 187 und 188, »Elektrostatisches Pulversprühen«, »Elektrostatisches Sprühen« und »Elektrostatisches Wirbelbadverfahren«, bekannt sind.

Methodisch weist die Applikation der Pulverslurries (F) auch keine Besonderheiten auf, sondern kann durch alle üblichen Applikationsmethoden, wie z.B. Spritzen, Rakeln, Streichen, Gießen, Tauchen, Träufeln oder Walzen, erfolgen. Vorzugsweise werden Spritzapplikafionsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air- Heißspritzen. Auch hier empfiehlt es sich unter Ausschluß von aktinischer Strahlung zu arbeiten, um eine vorzeitige Vernetzung der erfindungsgemäßen Dual-Cure-Beschichtungsstoffe, - Klebstoffe und -Dichtungsmassen zu vermeiden.

Als Substrate kommen all die in Betracht, deren Oberfläche durch die Anwendung von Hitze und/oder aktinischer Strahlung bei der Härtung der hierauf befindlichen Schichten nicht geschädigt wird. Vorzugsweise bestehen die Substrate aus Metallen, Kunststoffen, Holz, Keramik, Stein, Textil, Faserverbunden, Leder, Glas, Glasfasem, Glas- und Steinwolle, mineral- und harzgebundene Baustoffen, wie Gips- und Zementplatten oder Dachziegel, sowie Verbunden dieser Materialien.

Demnach sind die Beschichtungsstoffe, Klebstoffe und Dichtungsmassen hervorragend für die Beschichtung, das Verkleben und das Abdichten von Kraftfahrzeugkarosserien, Teilen von Kraftfahrzeugkarosserien, Kraftfahrzeugen im Innen- und Außenbereich, Bauwerken im Innen- und Außenbereich, Türen, Fenstern und Möbeln sowie für das Lackieren, Verkleben und Abdichten im Rahmen der industriellen Lackierung beispielsweise von Kleinteilen, wie Muttern, Schrauben, Felgen oder Radkappen, von Coils, Container, Emballagen, elektrotechnischen Bauteilen, wie Motorwicklungen oder Transformatorwicklungen, und von weißer Ware, wie Haushaltsgeräte, Heizkessel und Radiatoren, geeignet.

Im Falle elektrisch leitfähiger Substrate können Grundierungen verwendet werden, die in üblicher und bekannter Weise aus Elektrotauchlacken hergestellt werden. Hierfür kommen sowohl anodische als auch kathodische Elektrotauchlacke, insbesondere aber kathodische Elektrotauchlacke, in Betracht. Im Falle von nichtfunktionalisierten und/oder unpolaren Kunststoffoberflächen können diese vor der Beschichtung in bekannter Weise einer Vorbehandlung, wie mit einem Plasma oder mit Beflammen, unterzogen oder mit einer Hydrogrundierung versehen werden.

Auch die Härtung der applizierten Pulverslurries (F) und Pulverlacke (G) weist keine methodischen Besonderheiten auf, sondern erfolgt nach den üblichen und bekannten thermischen Methoden, wie Erhitzen in einem Umluftofen oder Bestrahlen mit IR-Lampen. Für die Härtung mit aktinischer Strahlung kommen Strahlenquellen wie Quecksilberhoch- oder -niederdruckdampflampen, welche gegebenenfalls mit Blei dotiert sind, um ein Strahlenfenster bis zu 405 nm zu öffnen, oder Elektronenstrahlquellen in Betracht. Weitere Beispiele geeigneter Verfahren und Vorrichtungen zur Härtung mit aktinischer Strahlung werden in der deutschen Patentanmeldung DE 198 18 735 A 1, Spalte 10, Zeilen 31 bis 61, beschrieben.

Die resultierenden Beschichtungen, insbesondere die ein- oder mehrschichtigen farb- und/oder effektgebenden Lackierungen, Kombinationseffektschichten und Klarlackierungen sind einfach herzustellen und weisen hervorragende optische Eigenschaften und eine sehr hohe Licht-, Chemikalien-, Wasser-, Schwitzwasser- und Witterungsbeständigkeit auf. Insbesondere sind sie frei von Trübungen und Inhomogenitäten. Sie sind hart, flexibel und kratzfest. Sie weisen einen sehr gutes Reflow-Verhalten und eine hervorragende Zwischenschichthaftung und eine gute bis sehr gute Haftung zu üblichen und bekannten Autoreparaturlackierungen auf.

Die resultierenden Klebschichten verbinden die unterschiedlichsten Substrate auf Dauer haftfest miteinander und haben eine hohe chemische und mechanische Stabilität auch bei extremen Temperaturen und/oder Temperaturenschwankungen.

Desgleichen dichten die resultierenden Dichtungen die Substrate auf Dauer ab, wobei sie eine hohe chemische und mechanische Stabilität auch bei extremen Temperaturen und/oder Temperaturschwankungen sogar i. V. m. der Einwirkung aggressiver Chemikalien aufweisen.

Ein weiterer Vorteil der Dual-Cure-Beschichtungsstoffe, -Klebstoffe und-Dichtungsmassen ist, daß sie auch in den Schattenzonen komplex geformter dreidimensionaler Substrate, wie Karosserien, Radiatoren oder elektrische Wickelgüter, auch ohne optimale, insbesondere vollständige, Ausleuchtung der Schattenzonen mit aktinischer Strahlung Beschichtungen, Klebschichten und Dichtungen liefern, deren anwendungstechnisches Eigenschaftsprofil an das der Beschichtungen, Klebschichten und Dichtungen außerhalb der Schattenzonen zumindest heranreicht. Dadurch werden die in den Schattenzonen befindlichen Beschichtungen, Klebschichten und Dichtungen auch nicht mehr leicht durch mechanische und/oder chemische Einwirkung geschädigt, wie sie beispielsweise beim Einbau weiterer Bauteile von Kraftfahrzeugen in die beschichteten Karosserien eintreten kann.

Demzufolge weisen die auf den vorstehend aufgeführten technologischen Gebieten üblicherweise angewandten grundierten oder ungrundierten Substrate, die mit mindestens einer erfindungsgemäßen Beschichtung beschichtet, mit mindestens einer erfindungsgemäßen Klebschicht verklebt und/oder mit mindestens einer erfindungsgemäßen Dichtung abgedichtet sind, bei einem besonders vorteilhaften anwendungstechnischen Eigenschaftsprofil eine besonders lange Gebrauchsdauer auf, was sie wirtschaftlich besonders attraktiv macht.

### Beispiele

### Herstellbeispiel 1

### Die Herstellung eines Emulgators

In einem geeigneten Reaktionsgefäß, ausgerüstet mit drei Zulaufgefäßen, Rührer, Rückflußkühler und Ölheizung, wurden 52,56 Gewichtsteile deionisiertes Wasser vorgelegt und auf 90 °Celsius erhitzt. Anschließend wurden bei dieser Temperatur drei separate Zuläufe parallel und gleichmäßig zur Vorlage hinzudosiert. Der erste Zulauf bestand aus 10,18 Gewichtsteilen Acrylsäure, 18,35 Gewichtsteilen Methylmethacrylat und 1,49 Gewichtsteilen Diphenylethylen. Der zweite Zulauf bestand aus 9,9 Gewichtsteilen einer 25 Gew.-%igen Ammoniaklösung in Wasser. Der dritte Zulauf bestand aus einer Lösung von 2,25 Gewichtsteilen Ammoniumperoxodisulfat in 5,25 Gewichtsteilen deionisiertem Wasser. Der erste und der zweite Zulauf wurden während einer Stunde zudosiert. Der dritte Zulauf wurde während 1,25 Stunden zudosiert. Nach der Beendigung der Zugabe wurde während vier Stunden nachpolymerisiert. Dabei wurde die Temperatur der Reaktionsmischung langsam abgesenkt. Es resultierte eine Dispersion des Emulgators mit einem Festkörpergehalt von 33 Gew.-%. Die wäßrige Lösung des Emulgators wies bei der kritischen Micellbildungskonzentration eine Oberflächespannung von 50 mN/m auf.

### Beispiel 1

### Die Herstellung einer Pulverslurry (F) und eines Pulverlacks (G) mit Hilfe des erfindungsgemäßen Verfahrens

In einem konischen Taylorreaktor, wie er in der deutschen Patentanmeldung DE 198 28 742 A 1, Spalte 11, Zeilen 43, bis Spalte 12, Seite 26, i. V. m. Figur 1 beschrieben wird, wurde ein Monomeren-Initiator-Gemisch aus
- 28 Gewichtsteilen Glycidylmethacrylat,
- 35 Gewichtsteilen Methylmethacrylat,
- 25 Gewichtsteilen Styrol,
- 11 Gewichtsteilen n-Butylmethacrylat und
- 1,0 Gewichtsteil Di-tert.-Amylperoxid

polymerisiert. Dabei wurden das Monomerengemisch und der Initiator getrennt aus entsprechenden Vorlagebehältern über Dosierpumpen kontinuierlich in den Taylorreaktor eindosiert. Die Polymerisation wurde unter den Bedingungen der Taylorströmung durchgeführt (vgl. DE 198 28 742 A 1, Spalte 1,Zeilen 13 bis 67). Die Harzschmelze (A), die aus den Taylorreaktor ausgetragen wurde, hatte bei 160 °C eine Viskosität von 44 Pas und ein Epoxyäquivalentgewicht von 522 meq/g Harz.

Die Schmelze (A) wurde kontinuierlich in einen beheizten Pufferbehälter gefördert, worin sie mit Zusatzstoffen vermischt wurde, so daß eine Bindemittel-Zusatzstoff-Schmelze (A) der folgenden Zusammensetzung resultierte:
- 95,1 Gew.-% des epoxidgruppenhaltigen Methacrylatcopolymerisats,
- 2,5 Gew.-% Tinuvin ® CGL 1545 (handelsüblicher UV- Absorber der Firma Ciba Specialty Chemicals),
- 1,3 Gew.-% Tinuvin ® 123 (handelsüblicher reversibler Radikalfänger, HALS, der Firma Ciba Specialty Chemicals),
- 0,3 Gew.-% Irgafos ® P-EPQ (handelsübliches Antioxidans der Firma Ciba Specialty Chemicals).
- 0,8 Gew.-% Troy® EX 542 (handelsübliches benzoinhaltiges Entgasungsmittel der Firma Troy, USA).

Die Schmelze (A) wurde in einen statischen Sulzer-Mischer (Leervolumen: 0,0463 Liter) mit einem Massenstrom von 34 kg/h gefördert. Ihr Anteil an der dispersen Phase lag bei 73,6 Gew.-%.

Aus einem ersten Schmelzebehälter wurde parallel und kontinuierlich Dodecandisäure (B 1) bei einer Temperatur von 154 °C mit einem Massenstrom von 7,2 kg/h in den Mischer gepumpt. Ihr Anteil an der dispersen Phase lag bei 16,2 Gew.-%.

Aus einem zweiten Schmelzebehälter wurde ein mit 3,5-Dimethylpyrazol blockiertes Polyisocyanat (B 2) auf der Basis von isophorondiisocyanat mit einem NCO-Gehalt von 15,5 Gew.-% bei einer Temperatur von 134 °C mit einem Massenstrom von 5,0 kg/h in den Mischer gepumpt. Sein Anteil an der dispersen Phase lag bei 10,8 Gew.-%.

Durch das Vermischen der Schmelze (A) und der beiden Schmelzen (B1) und (B 2) resultierte die Schmelze (C). Die Verweilzeit im Mischaggregat betrug 3,5 Sekunden.

Der Austritt des Mischers war mit einem Zahnkranz-Dispergieraggregat ("K-Generator" der Firma Kinematica AG, Luzern, Schweiz) verbunden, in das parallel zur dispersen Phase (die Schmelze (C)) kontinuierlich aus einem Dosierbehälter die kontinuierliche wäßrige Phase (D) aus 95 Gew.-% deionisiertem Wasser und 5,0 Gew.-% der Emulgatordispersion des Herstellbeispiels 1 mit einem Massenstrom von 77,5 kg/h zudosiert wurde.

Die Drehzahl des Zahnkranz-Dispergieraggregats betrug 9.000 U/min. Die Verweilzeit betrug 5 Sekunden.

Die resultierende Emulsion' (E) wurde nach dem Verlassen des Zahnkranz-Dispergieraggregats mit einem Rohrkühler rasch abgekühlt. Die resultierende Suspension (Pulverslurry (F)) wies eine z-mittlere Teilchengröße von 12,9 µm (gemessen mit dem Laserbeugungsgerät der Firma Malvern) auf.

Die Pulverslurry (F) war völlig absetzstabil und wies hervorragende Transport- und Applikationseigenschaften auf. Sie lieferte glatte, hoch glänzende, kratzfeste, flexible, harte und chemikalienbeständige Klarlackierungen mit hervorragenden Haftungseigenschaften. Außerdem war sie hervorragend für die Herstellung von Pulverlacken (G) geeignet.

Die Suspension (F) wurde zu diesem Zweck in einem Sprühturm derart versprüht, daß die Temperatur der Partikel nicht über 40 °C stieg. Die Temperatur des Trocknungsluftstroms lag bei 110 °C. Der Wassergehalt des erfindungsgemäßen Pulverlacks lag unter 0,5 Gew.-%. Seine mittlere Teilchengröße betrug 25 µm.

Der Pulverlack (G) war lager- und transportstabil und neigte nicht zum Verbacken. Seine Fluidität und seine Applikationseigenschaften waren hervorragend. Er lieferte glatte, hoch glänzende, kratzfeste, flexible, harte und chemikalienbeständige Klarlackierungen mit hervorragenden Haftungseigenschaften.

### Beispiel 2

### Die Herstellung einer Pulverslurry (F) und eines Pulverlacks (G) mit Hilfe des erfindungsgemäßen Verfahrens

Beispiele 1 wurde wiederholt, nur daß die Zusatzstoffe nicht über die Schmelze (A) eingearbeitet wurden und daß anstelle der Schmelze (B 2) des blockiertes Polyisocyanats eine Schmelze (B 2) aus
- 55,49 Gewichtsteilen TACT ® (Tris(alkoxycarbonylamino)triazin der Firma CYTEC),
- 23,12 Gewichtsteilen Tinuvin ® CGL 1545 (handelsüblicher UV-Absorber der Firma Ciba Specialty Chemicals),
- 11,56 Gewichtsteilen Tinuvin ® 123 (handelsüblicher reversibler Radikalfänger, HALS, der Firma Ciba Specialty Chemicals),
- 2,89 Gewichtsteilen Irgafos ® P-EPQ (handelsübliches Antioxidans der Firma Ciba Specialty Chemicals) und
- 6,94 Gewichtsteilen Troy ® EX 542 (handelsübliches benzoinhaltiges Entgasungsmittel der Firma Troy, USA)

verwendet wurde.

Das Gewichtsverhältnis von Schmelze (A) zu Schmelze (B 1) (Dodecandisäure; vgl. Beispiel 1) zur Schmelze (B 2) betrug 75,18 : 16,17 : 8,65. Das Gewichtsverhältnis von resultierender Schmelze (C) zu wäßrigem Medium (D) (vgl. Beispiel 1) lag bei 37 : 83.

Die resultierende Emulsion (E) wurde nach dem Verlassen des Zahnkranz-Dispergieraggregats mit einem Rohrkühler rasch abgekühlt.

Die resultierende Suspension (Pulverslurry (F)) wies eine z-mittlere Teilchengröße von 12,9 µm (gemessen mit dem Laserbeugungsgerät der Firma Malvern) auf.

Die Pulverslurry (F) war völlig absetzstabil und wies hervorragende Transport- und Applikationseigenschaften auf. Sie lieferte glatte, hoch glänzende, kratzfeste, flexible, harte und chemikalienbeständige Klarlackierungen mit hervorragenden Haftungseigenschaften. Außerdem war sie hervorragend für die Herstellung von Pulverlacken (G) geeignet.

Die Suspension (F) wurde zu diesem Zweck in einem Sprühturm derart versprüht, daß die Temperatur der Partikel nicht über 40 °C stieg. Die Temperatur des Trocknungsluftstroms lag bei 110 °C. Der Wassergehalt des erfindungsgemäßen Pulverlacks lag unter 0,5 Gew.-%. Seine mittlere Teilchengröße betrug 25 µm.

Der Pulverlack (G) war lager- und transportstabil und neigte nicht zum Verbacken. Seine Fluidität und seine Applikationseigenschaften waren hervorragend. Er lieferte glatte, hoch glänzende, kratzfeste, flexible, harte und chemikalienbeständige Klarlackierungen mit hervorragenden Haftungseigenschaften.

## Patentansprüche

1. Kontinuierliches Verfahren zur Herstellung von Pulverlacksuspensionen (Pulverslurries) und Pulverlacken durch Emulgierung ihrer Bestandteile, **dadurch gekennzeichnet, daß** man
(1) mindestens eine flüssige Komponente (A), die mindestens ein Bindemittel enthält oder hieraus besteht, in einem Reaktionsgefäß durch kontinuierliche Polymerisation, Polykondensation und/oder Polyaddition in Masse herstellt,
(2) die flüssige Komponente (A) kontinuierlich aus dem Reaktionsgefäß austrägt und in ein Mischaggregat fördert, worin man sie kontinuierlich mit mindestens einer flüssigen Komponente (B), die mindestens ein weiteres Ausgangsprodukt der Pulverslurries und Pulverlacke enthält oder hieraus besteht, vermischt, wodurch eine flüssige Komponente (C) resultiert, und
(3) die flüssige Komponente (C) kontinuierlich in ein Dispergieraggregat fördert, worin man sie in einem kontinuierlich zugeführten wäßrigen Medium (D) emulgiert, wodurch eine wäßrige Emulsion (E) flüssiger Partikel resultiert,
wonach man zur Herstellung der Pulverslurries (F)
(4) die Emulsion (E) abkühlen läßt, so daß sich eine Suspension (F) dimensionsstabiler Partikel bildet, und
wonach man zur Herstellung der Pulverlacke (G) die dimensionsstabilen Partikel
(5) direkt aus der wäßrigen Emulsion (E) oder alternativ
(6) aus der Suspension (F) isoliert.

2. Verfahren nach Anspruch 1, **dadurch gekennzeichnet, daß** man als Reaktionsgefäß mindestens einen Rührkessel, eine Rührkesselkaskade, einen Rohrreaktor, einen Schlaufenreaktor, einen Taylorreaktor, einen Extrudern oder eine Kombination mindestens zweier dieser Reaktoren verwendet.

3. Verfahren nach Anspruch 1 oder 2, **dadurch gekennzeichnet, daß** das Reaktionsgefäß ein Überdruckgefäß ist.

4. Verfahren nach Anspruch 2 oder 3, **dadurch gekennzeichnet, daß** das Reaktionsgefäß ein Taylorreaktor ist.

5. Verfahren nach einem der Ansprüche 1 bis 4, **dadurch gekennzeichnet, daß** die Bindemittel aus der Gruppe, bestehend aus statistisch, alternierend und blockartig aufgebauten, linearen, verzweigten und kammartig aufgebauten (Co)Polymerisaten von olefinisch ungesättigten Monomeren, Polyadditionsharzen und Polykondensationsharzen, ausgewählt werden.

6. Verfahren nach Anspruch 5, **dadurch gekennzeichnet, daß** die Bindemittel (A) aus der Gruppe der (Co)Polymerisate von olefinisch ungesättigten Monomeren ausgewählt werden.

7. Verfahren nach Anspruch 6, **dadurch gekennzeichnet, daß** die Bindemittel (A) aus der Gruppe der (Meth)Acrylatcopolymerisate ausgewählt werden.

8. Verfahren nach einem der Ansprüche 1 bis 7, **dadurch gekennzeichnet, daß** das weitere Ausgangsprodukt aus der Gruppe der Vernetzungsmittel ausgewählt wird.

9. Verfahren nach einem der Ansprüche 1 bis 8, **dadurch gekennzeichnet, daß** die Schmelzen (A) und/oder (B) mindestens einen Zusatzstoffe, ausgewählt aus der Gruppe, bestehend aus Pigmenten, Emulgatoren und flüssigen und festen Zusatzstoffen, enthalten.

10. Verfahren nach einem der Ansprüche 1 bis 9, **dadurch gekennzeichnet, daß** man als Mischaggregat einen Rührkessel, einen Extruder oder einen statischen Mischer verwendet.

11. Verfahren nach einem der Ansprüche 1 bis 10, **dadurch gekennzeichnet, daß** als Dispergieraggregat ein Inline-Dissolver verwendet wird.

12. Verfahren nach Anspruch 11, **dadurch gekennzeichnet, daß** der Inline-Dissolver ein Zahnkranz-Dispergieraggregat mit mindestens einer zylindrischen Anordnung mindestens zweier auf Haltern sitzender, sich umschließender, relativ zueinander gegenläufig rotierbarer Zerkleinerungsorgankränze (Stator und Rotor) ist, wobei der sich durch die Relativbewegung zwischen dem Stator und Rotor ergebende Arbeitspalt Wände aufweist, die nicht-parallel zueinander verlaufen.

13. Verfahren nach einem der Ansprüche 1 bis 12, **dadurch gekennzeichnet, daß** die Verweilzeit der flüssigen Komponenten (A), (B) und (C) sowie des wäßrigen Mediums (D) im Dispergieraggregat 0,5 bis 20 Sekunden beträgt.

14. Verfahren nach einem der Ansprüche 1 bis 13, **dadurch gekennzeichnet, daß** die dimensionsstabilen Partikel durch Sprühtrocknung oder Gefriertrocknung aus der Suspension (F) isoliert werden.

15. Verfahren nach einem der Ansprüche 1 bis 13, **dadurch gekennzeichnet, daß** die dimensionsstabilen Partikel durch Druckentspannung aus den Emulsionen (E) isoliert werden.

16. Verfahren nach einem der Ansprüche 1 bis 15, **dadurch gekennzeichnet, daß** das wäßrige Medium (D) mindestens einen Emulgator enthält.

17. Verfahren nach Anspruch 16, **dadurch gekennzeichnet, daß** die wäßrige Lösung des Emulgators bei der kritischen Micellbildungskonzentration (KMK) eine Oberflächenspannung >30 mN/m hat.

18. Verfahren nach Anspruch 17, **dadurch gekennzeichnet, daß** der Emulgator aus der Gruppe der Copolymerisate, herstellbar durch ein- oder mehrstufige radikalische Copolymerisation in einem wäßrigen Medium von
(a) mindestens einem olefinisch ungesättigten Monomer und
(b) mindestens einem vom olefinisch ungesättigten Monomer (a) verschiedenen olefinisch ungesättigten Monomer der allgemeinen Formel I
**R**^{**1**}**R**^{**2**}**C=CR**^{**3**}**R**^{**4**} (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
ausgewählt wird.

19. Verfahren nach Anspruch 18, **dadurch gekennzeichnet, daß** es sich bei den Arylresten R¹, R², R³ und/oder R⁴ der Monomeren (b) um Phenyl- oder Naphthylreste handelt.

20. Verfahren nach Anspruch 18 oder 19, **dadurch gekennzeichnet, daß** es sich um Phenylreste handelt.

21. Verfahren nach einem der Ansprüche 18 bis 20, **dadurch gekennzeichnet, daß** die Substituenten in den Resten R¹, R², R³ und/oder R⁴ der Monomeren (b) aus der Gruppe, bestehend aus elektronenziehenden oder elektronenschiebenden Atomen oder organischen Resten, ausgewählt werden.

22. Verfahren nach Anspruch 21, **dadurch gekennzeichnet, daß** die Substituenten aus der Gruppe, bestehend aus Halogenatomen, Nitril-, Nitro-, partiell oder vollständig halogenierten Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyresten; Arylthio-, Alkylthio- und Cycloalkylthioresten und primären, sekundären und/oder tertiären Amionogruppen, ausgewählt werden.

23. Verfahren nach einem der Ansprüche 18 bis 22, **dadurch gekennzeichnet, daß** mindestens ein Monomer (a) aus der Gruppe der carboxylgruppenhaltigen Monomeren (a3) ausgewählt wird.

24. Verfahren nach einem der Ansprüche 1 bis 22, **dadurch gekennzeichnet, daß** das wäßrige Medium (D) die Suspension mindestens eines Pigments darstellt.

25. Verfahren nach Anspruch 24, **dadurch gekennzeichnet, daß**, die Pigmente aus der Gruppe, bestehend aus farb- und/oder effektgebenden, fluoreszierenden, elektrisch leitfähigen und magnetisch abschirmenden Pigmenten, Metallpulvern, organischen und anorganischen, transparente und opaken Füllstoffen und Nanopartikeln ausgewählt werden.

26. Verfahren nach einem der Ansprüche 1 bis 25, **dadurch gekennzeichnet, daß** die Pulverslurries (F) und die Pulverlacke (G) physikalisch oder thermisch und/oder mit aktinischer Strahlung härtbar sind.

27. Verfahren nach Anspruch 26, **dadurch gekennzeichnet, daß** die thermisch oder thermisch und mit aktinischer Strahlung härtbaren Pulverslurries (F) und die Pulverlacke (G) Einkomponentensysteme sind.

## Claims

1. Continuous process for preparing powder coating suspensions (powder slurries) and powder coating materials by emulsification of their constituents, **characterized in that**
(1) at least one liquid component (A) comprising or consisting of at least one binder is prepared in a reaction vessel by continuous addition polymerization, polycondensation and/or polyaddition in bulk,
(2) the liquid component (A) is discharged continuously from the reaction vessel and conveyed into a mixing unit in which it is mixed continuously with at least one liquid component (B) comprising or consisting of at least one further starting product of the powder slurries and powder coating materials, to give a liquid component (C), and
(3) the liquid component (C) is conveyed continuously into a dispersing unit in which it is emulsified in a continuously supplied aqueous medium (D), to give an aqueous emulsion (E) of liquid particles,
and then to prepare the powder slurries (F)
(4) the emulsion (E) is cooled, so that a suspension (F) of dimensionally stable particles is formed, and
then to prepare the powder coating materials (G) the dimensionally stable particles are isolated
(5) directly from the aqueous emulsion (E) or alternatively
(6) from the suspension (F).

2. Process according to Claim 1, **characterized in that** at least one stirred tank, stirred tank cascade, tube reactor, loop reactor, Taylor reactor, extruder, or combination of at least two of these reactors is used as reaction vessel.

3. Process according to Claim 1 or 2, **characterized in that** the reaction vessel is an overpressure vessel.

4. Process according to Claim 2 or 3, **characterized in that** the reaction vessel is a Taylor reactor.

5. Process according to any of Claims 1 to 4, **characterized in that** the binders are selected from the group consisting of random, alternating and block, linear, branched, and comb addition (co)polymers of olefinically unsaturated monomers, polyaddition resins and polycondensation resins.

6. Process according to Claim 5, **characterized in that** the binders (A) are selected from the group of the addition (co)polymers of olefinically unsaturated monomers.

7. Process according to Claim 6, **characterized in that** the binders (A) are selected from the group of the (meth)acrylate copolymers.

8. Process according to any of Claims 1 to 7, **characterized in that** the further starting product is selected from the group of the crosslinking agents.

9. Process according to any of Claims 1 to 8, **characterized in that** the melts (A) and/or (B) comprise at least one additive selected from the group consisting of pigments, emulsifiers, and liquid and solid additives.

10. Process according to any of Claims 1 to 9, **characterized in that** a stirred tank, extruder or static mixer is used as mixing unit.

11. Process according to any of Claims 1 to 10, **characterized in that** an inline dissolver is used as dispersing unit.

12. Process according to Claim 11, **characterized in that** the inline dissolver is a toothed-ring dispersing unit comprising at least one cylindrical arrangement of at least two comminutor rings (stator and rotor) which are seated on holders, are in mutual embrace, and are rotatable in opposite directions relative to one another, the working gap which results from the relative movement between stator and rotor having walls which extend nonparallelwise with respect to one another.

13. Process according to any of Claims 1 to 12, **characterized in that** the residence time of the liquid components (A), (B), and (C) and of the aqueous medium (D) in the dispersing unit is from 0.5 to 20 seconds.

14. Process according to any of Claims 1 to 13, **characterized in that** the dimensionally stable particles are isolated from the suspension (F) by spray drying or freeze drying.

15. Process according to any of Claims 1 to 13, **characterized in that** the dimensionally stable particles are isolated from the emulsions (E) by expansion.

16. Process according to any of Claims 1 to 15, **characterized in that** the aqueous medium (D) comprises at least one emulsifier.

17. Process according to Claim 16, **characterized in that** the aqueous solution of the emulsifier at the critical micelle concentration (CMC) has a surface tension > 30 mN/m.

18. Process according to Claim 17, **characterized in that** the emulsifier is selected from the group of copolymers preparable by single-stage or multistage free-radical copolymerization in an aqueous medium of
(a) at least one olefinically unsaturated monomer and
(b) at least one olefinically unsaturated monomer different from the olefinically unsaturated monomer (a) and of the general formula I
**R**^{**1**}**R**^{**2**}**C=CR**^{**3**}**R**^{**4**} (I)
in which the radicals R¹, R² R³, and R⁴ each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals with the proviso that at least two of the variables R¹, R², R³ and R⁴ are substituted or unsubstituted aryl, arylalkyl or arylcycloalkyl radicals, especially substituted or unsubstituted aryl radicals.

19. Process according to Claim 18, **characterized in that** the aryl radicals R¹, R², R³ and/or R⁴ of the monomers (b) are phenyl or naphthyl radicals.

20. Process according to Claim 18 or 19, **characterized in that** the radicals are phenyl radicals.

21. Process according to any of Claims 18 to 20, **characterized in that** the substituents in the radicals R¹, R², R³ and R⁴ of the monomers (b) are selected from the group consisting of electron-withdrawing or electron-donating atoms or organic radicals.

22. Process according to Claim 21, **characterized in that** the substituents are selected from the group consisting of hydrogen atoms, nitrile, nitro, partially or fully halogenated alkyl, cycloalkyl, alkylcycloalkyl, cycloalkylalkyl, aryl, alkylaryl, cycloalkylaryl, arylalkyl, and arylcycloalkyl radicals; aryloxy, alkyloxy, and cycloalkyloxy radicals; arylthio, alkylthio, and cycloalkylthio radicals, and primary, secondary and/or tertiary amino groups.

23. Process according to any of Claims 18 to 22, **characterized in that** at least one monomer (a) is selected from the group of the carboxyl-containing monomes (a3).

24. Process according to any of Claims 1 to 22, **characterized in that** the aqeous medium (D) comprises the suspension of at least one pigment.

25. Process according to Claim 24, **characterized in that** the pigments are selected from the group consisting of colour and/or effect pigments, fluorescent pigments, electrically conductive pigments, and magnetically shielding pigments, metal powders, organic and inorganic, transparent and opaque fillers, and nanoparticles.

26. Process according to any of Claims 1 to 25, **characterized in that** the powder slurries (F) and powder coating materials (G) are curable physically or thermally and/or with actinic radiation.

27. Process according to Claim 26, **characterized in that** the powder slurries (F) and the powder coating materials (G) curable thermally or both thermally and with actinic radiation are one-component systems.

## Revendications

1. Procédé de production en continu de vernis pulvérulents en suspension (suspensions pulvérulentes) et de peintures en poudre par émulsionnement de leurs constituants, **caractérisé en ce que** :
(1) on produit au moins un composant liquide (A), qui contient au moins un liant ou en est constitué, dans un appareil à réaction, par polymérisation, polycondensation et/ou polyaddition en masse continue(s),
(2) on retire le composant liquide (A) en continu de l'appareil à réaction et on l'envoie dans un agrégat de mélange où on le mélange en continu avec au moins un composant liquide (B) qui contient au moins un autre produit de départ des suspensions pulvérulentes et des peintures en poudre ou en est constitué, ce qui donne un composant liquide (C), et
(3) on envoie en continu le composant liquide (C) dans un agrégat de dispersion dans lequel on l'émulsionne dans un milieu aqueux introduit en continu (D), ce qui donne une émulsion aqueuse (E) de particules liquides, après quoi, pour la production des suspensions pulvérulentes (F),
(4) on fait refroidir l'émulsion (E), de telle sorte que se forme une suspension (F) de particules de dimensions stables, et
après quoi, pour la production des peintures en poudre (G), on isole les particules de dimensions stables
(5) directement à partir de l'émulsion aqueuse (E) ou, en alternative
(6) à partir de la suspension (F).

2. Procédé selon la revendication 1, **caractérisé en ce qu'**on utilise, comme appareil à réaction, au moins une cuve agitée, une cascade de cuves agitées, un réacteur tubulaire, un réacteur en boucle, un réacteur de Taylor, une extrudeuse ou une combinaison d'au moins deux de ces réacteurs.

3. Procédé selon la revendication 1 ou 2, **caractérisé en ce que** l'appareil à réaction est un appareil à surpression.

4. Procédé selon la revendication 2 ou 3, **caractérisé en ce que** l'appareil à réaction est un réacteur de Taylor.

5. Procédé selon l'une quelconque des revendications 1 à 4, **caractérisé en ce que** les liants sont choisis dans le groupe constitué de (co)polymérisats de structure statistique, alternante et séquencée, linéaires, ramifiés et en forme de peigne, de monomères oléfiniquement insaturés, résines de polyaddition et résines de polycondensation.

6. Procédé selon la revendication 5, **caractérisé en ce que** les liants (A) sont choisis dans le groupe des (co)polymérisats de monomères oléfiniquement insaturés.

7. Procédé selon la revendication 6, **caractérisé en ce que** les liants (A) sont choisis dans le groupe des copolymérisats de (méth)acrylate.

8. Procédé selon l'une quelconque des revendications 1 à 7, **caractérisé en ce que** l'autre produit de départ est choisi dans le groupe des agents de réticulation.

9. Procédé selon l'une quelconque des revendications 1 à 8, **caractérisé en ce que** les matières fondues (A) et/ou (B) contiennent au moins un additif choisi dans le groupe constitué de pigments, émulsionnants et additifs liquides et solides.

10. Procédé selon l'une quelconque des revendications 1 à 9, **caractérisé en ce qu'**on utilise comme agrégat de mélange une cuve agitée, une extrudeuse ou un mélangeur statique.

11. Procédé selon l'une quelconque des revendications 1 à 10, **caractérisé en ce qu'**on utilise comme agrégat de dispersion un dissolveur inline.

12. Procédé selon la revendication 11, **caractérisé en ce que** le dissolveur inline est un agrégat de dispersion à couronnes dentées avec au moins une disposition cylindrique d'au moins deux couronnes d'organes de fragmentation (stator et rotor) que l'on peut faire tourner en sens inverse l'une par rapport à l'autre, l'une entourant l'autre, reposant sur des supports, l'espace de travail qui est formé par le mouvement relatif entre le stator et le rotor présentant des parois qui ne sont pas parallèles entre elles.

13. Procédé selon l'une quelconque des revendications 1 à 12, **caractérisé en ce que** le temps de séjour des composants liquides (A), (B) et (C) ainsi que du milieu aqueux (D) dans l'agrégat de dispersion est de 0,5 à 20 seconde(s).

14. Procédé selon l'une quelconque des revendications 1 à 13, **caractérisé en ce que** les particules de dimensions stables sont isolées par séchage par pulvérisation ou lyophilisation à partir de la suspension (F).

15. Procédé selon l'une quelconque des revendications 1 à 13, **caractérisé en ce que** les particules de dimensions stables sont isolées par détente à partir des émulsions (E).

16. Procédé selon l'une quelconque des revendications 1 à 15, **caractérisé en ce que** le milieu aqueux (D) contient au moins un émulsionnant.

17. Procédé selon la revendication 16, **caractérisé en ce que** la solution aqueuse de l'émulsionnant possède, à la concentration de formation de micelles critique (CMC), une tension superficielle > 30 mN/m.

18. Procédé selon la revendication 17, **caractérisé en ce que** l'émulsionnant est choisi dans le groupe des copolymérisats pouvant être produits par copolymérisation radicalaire en une ou plusieurs étape(s) dans un milieu aqueux de
(a) au moins un monomère oléfiniquement insaturé, et
(b) au moins un monomère oléfiniquement insaturé différent du monomère oléfiniquement insaturé (a), de formule générale I
R¹R²C=CR³R⁴ (I),
dans laquelle les radicaux R¹, R², R³ et R⁴ représentent, indépendamment les uns des autres, des atomes d'hydrogène ou des radicaux alkyle, cycloalkyle, alkylcycloalkyle, cycloalkylalkyle, aryle, alkylaryle, cycloalkylaryle, arylalkyle ou arylcycloalkyle substitués ou non substitués, avec la précision qu'au moins deux des R¹, R² , R³ et R⁴ variables représentent des radicaux aryle, arylalkyle ou arylcycloalkyle substitués ou non substitués, en particulier des radicaux aryle substitués ou non substitués.

19. Procédé selon la revendication 18, **caractérisé en ce qu'**il s'agit, concernant les radicaux aryle R¹, R², R³ et/ou R⁴ des monomères (b), de radicaux phényle ou naphtyle.

20. Procédé selon la revendication 18 ou 19, **caractérisé en ce qu'**il s'agit de radicaux phényle.

21. Procédé selon l'une quelconque des revendications 18 à 20, **caractérisé en ce que** les substituants dans les radicaux R¹, R², R³ et/ou R⁴ des monomères (b) sont choisis dans le groupe constitué d'atomes attirant des électrons ou déplaçant les électrons ou de radicaux organiques.

22. Procédé selon la revendication 21, **caractérisé en ce que** les substituants sont choisis dans le groupe constitué d'atomes d'halogènes, de radicaux nitrile, nitro, de radicaux alkyle, cycloalkyle, alkylcycloalkyle, cycloalkylalkyle, aryle, alkyaryle, cycloalkylaryle, arylalkyle et arylcycloalkyle, partiellement ou entièrement halogénés ; de radicaux aryloxy, alkyloxy et cycloalkyloxy ; de radicaux arylthio, alkylthio, et cycloalkylthio et de groupes amino primaires, secondaires et/ou tertiaires.

23. Procédé selon l'une quelconque des revendications 18 à 22, **caractérisé en ce qu'**au moins un monomère (a) est choisi dans le groupe des monomères contenant le groupe carboxyle (a3).

24. Procédé selon l'une quelconque des revendications 1 à 22, **caractérisé en ce que** le milieu aqueux (D) constitue la suspension d'au moins un pigment.

25. Procédé selon la revendication 24, **caractérisé en ce que** les pigments sont choisis dans le groupe constitué de pigments colorants et/ou à effet, fluorescents, électriquement conducteurs et magnétiquement protecteurs, poudres métalliques, charges organiques et inorganiques transparentes et opaques et nanoparticules.

26. Procédé selon l'une quelconque des revendications 1 à 25, **caractérisé en ce que** les suspensions pulvérulentes (F) et les peinture en poudre (G) sont durcissables physiquement ou thermiquement et/ou avec rayonnement actinique.

27. Procédé selon la revendication 26, **caractérisé en ce que** les suspensions pulvérulentes durcissables thermiquement ou thermiquement et avec rayonnement actinique (F) et les peintures en poudre (G) sont des systèmes mono-composant.
